# EUROPÄISCHE PATENTSCHRIFT

(11) **EP 2 391 108 B1**
(45) Veröffentlichungstag und Bekanntmachung des Hinweises auf die Patenterteilung: **19.06.2013**
(21) Anmeldenummer: 11004340.3
(22) Anmeldetag: 23.08.2006
(51) Int. Cl.: H04N 1/04, H04N 1/00, G03B 42/04, G03B 42/08, H04N 1/12

(54) **Vorrichtung zum Auslesen von insbesondere flexiblen Speicherfolien**
Device for reading in particular flexible imaging plates
Dispositif de lecture, notamment d'écrans photostimulables flexibles

(30) Priorität: 27.09.2005 DE 102005046248
(43) Veröffentlichungstag der Anmeldung: 30.11.2011
(62) Teilanmeldung aus: 06777020.6
(73) Patentinhaber: Dürr Dental AG, 74321 Bietigheim-Bissingen (DE)
(72) Erfinder: Thoms, Michael, 91054 Erlangen (DE); Philipps, Bernd, 74199 Untergruppenbach (DE); Weber, Michael, 71576 Burgstetten (DE); Häntsch, Herbert, 71717 Beilstein (DE); Mustajbegovic, Enes, 74321 Bietigheim-Bissingen (DE)
(74) Vertreter: Ostertag, Reinhard

(56) Entgegenhaltungen:
- EP-A- 1 209 517
- EP-A- 1 521 115
- EP-A1- 0 304 060
- EP-A1- 1 494 068
- JP-A- 4 100 000
- JP-A- 2004 212 795
- US-A- 5 025 157
- US-A- 5 441 251
- US-A- 5 461 492
- US-A1- 2003 063 708
- US-A1- 2005 095 829

## Beschreibung

Die Erfindung betrifft eine Vorrichtung gemäß dem Oberbegriff des Anspruchs 1.

Speicherfolien werden üblicherweise anstelle von Röntgenfilmen zur Speicherung von beispielsweise medizinischen Bildinformationen, insbesondere Röntgenbildinformationen, verwendet. Die Bildinformationen werden mit speziellen Lesegeräten, insbesondere Flachbettscannern oder Trommelscannern von den Speicherfolien gelesen. Zum Auslesen wird die Speicherfolie punkt-, zeilen- oder blockweise beispielsweise mit einem Laserstrahl abgescannt und die von der Speicherfolie abgestrahlte Bildinformation mit einem entsprechenden optischen Detektor erfasst und mit einer Rechnereinheit ausgewertet. Im Anschluss an das Auslesen der Bildinformationen können diese gelöscht und die Speicherfolie erneut verwendet werden.

Zum Abscannen ist bei herkömmlichen Auslesevorrichtungen bekannt, die Speicherfolie auf einem Transportweg mit einem Antriebsmittel mit ihrer die Bildinformation aufweisenden Leseseite an einem Auslesebereich des Scanners entlang zu transportieren, wobei gleichzeitig der Laserstrahl die Leseseite der Speicherfolie senkrecht zur Transportrichtung abfährt. Die mit dem Detektor erfasste Bildinformation wird gemeinsam mit der Position des Laserstrahls auf der Speicherfolie erfasst und einem entsprechenden Bildpunkt der Speicherfolie zugeordnet.

Das Profil der Speicherfolie wird beim Transport entlang des Auslesebereichs an dessen Form angepaßt. Diese ist beispielsweise bei Trommelscannern zylindrisch, bei Flachbettscannern eben.

So beschreibt beispielsweise die EP 1 209 517 A2 eine Auslesevorrichtung, bei der die auszulesende Speicherfolie in einer zweiteiligen Kassette mit einem Deckelteil und einem Unterteil zugeführt wird. Im Inneren der Auslesevorrichtung werden die beiden Kassettenteile voneinander gelöst, wobei die Speicherfolie beispielsweise durch Aufkleben am Unterteil verbleibt. Das Unterteil und die daran befestigte Speicherfolie werden dann mit Hilfe einer Transporteinrichtung an einer Leseeinrichtung vorbei bewegt. Nach dem Löschen der Speicherfolie werden die beiden Kassettenteile wieder zu einer geschlossenen Kassette zusammengefügt, in welcher die Speicherfolie geschützt aufgenommen ist. Die Kassette mit der Speicherfolie wird daraufhin ausgegeben und steht für weitere Aufnahmen bereit.

Die US 5,025,157 beschreibt eine Auslesevorrichtung mit einem fest mit der Vorrichtung verbundenen konkaven Trägerschlitten, der über einen Schneckentrieb an einer Leseeinrichtung mit zylindrischem Lesebereich vorbei bewegt werden kann. Zum Auslesen wird eine flexible Speicherfolie über Einzugsrollen auf dem Trägerschlitten angeordnet und eingespannt. Daraufhin wird der Schneckentrieb in Gang gesetzt und die Speicherfolie ausgelesen.

Ferner zeigt die US 5,461,492 eine Vorrichtung zum Digitalisieren von Dias und Negativ-Filmstreifen, bei der einerseits ein Einzugschlitz zum Einbringen der Dias und andererseits ein Einzugschlitz zum Einbringen der Negativ-Filmstreifen vorgesehen ist.

Aufgabe der vorliegenden Ereindung ist es, eine Vorrichtung der eingangs genannten Art so auszugestalten, dass diese vielseitiger einsetzbar ist.

Diese Aufgabe wird erfindungsgemäß gelöst durch eine Vorrichtung mit den Merkmalen des Anspruchs 1.

Durch einen der Auslesevorrichtung zuführbaren im Wesentlichen festen Träger für die Speicherfolie wird deren Verschleiß reduziert, und so ihre Lebensdauer erhöht. Außerdem können die im Träger angeordneten Speicherfolien besser gehandhabt und somit schneller der Auslesevorrichtung zugeführt und in dieser transportiert werden.

Die Speicherfolie ist also zumindest während des Lesevorgangs durch den Träger geschützt. Ein direkter Kontakt der Speicherfolie beispielsweise mit Antriebsrädern des Antriebsmittels und/oder Führungsschienen oder -flächen entlang des Transportweges wird durch den Träger erübrigt. Auf diese Weise werden Kratzer und Schleifspuren auf der Speicherfolie weitgehend vermieden.

Durch die an die Leseeinrichtung angepaßte Form und Abmessung des Trägers sind auch bei hohen Transportgeschwindigkeiten optimale Ausleseergebnisse gewährleistet. Beispielsweise erfolgt der Transport des Trägers auf dem Transportweg nahezu spielfrei, so dass der erforderliche Abstand zwischen dem Laser oder einer entsprechenden Lichtquelle insbesondere des Scanners und der Leseseite der Speicherfolie immer genau eingehalten wird.

Die Größe des Trägers wird in der Regel von der Größe der Speicherfolie abhängen. Diese kann von kleinen intraoralen zentralen Formaten mit 20 x 30 mm bis zu großen Folienformaten von 350 x 34 mm reichen.

Um der Auslesevorrichtung auch Speicherfolien ohne Träger zuführen zu können, ist erfindungsgemäß ein zusätzliches Antriebsmittel für Speicherfolien ohne Träger, insbesondere mit einer Anordnung aus wenigstens einem Antriebsrad und wenigstens einem Andruckrad, vorgesehen.

Bei einer besonders vorteilhaften Ausführungsform ist die Leseeinrichtung ein Flachbettscanner oder ein Trommelscanner insbesondere für rechteckige Speicherfolien und der Träger ist entsprechend eben beziehungsweise zylindrisch gekrümmt. Mit Flachbettscannern und Trommelscannern sind besonders gute Ausleseergebnisse erzielbar.

Vorteilhafterweise ist die Speicherfolie eine intraorale Speicherfolie, an die besondere hygienische Anforderungen gestellt wird. So soll diese Art von Speicherfolien insbesondere nicht mit der Leseeinrichtung in Berührung kommen.

Zweckmäßigerweise ist die Speicherfolie mit dem Träger lösbar verbindbar. Auf diese Weise kann die Speicherfolie separat von Träger belichtet und später zum Auslesen mit diesem verbunden werden. Beispielsweise kann eine intraorale Speicherfolie in einer bekannten Hygienehülle lichtdicht verpackt sein. Sie wird dann nach der Röntgenbelichtung auf den festen Träger umgesetzt.

Um die Speicherfolie technisch einfach im Träger anordnen zu können, kann der Träger eine Kassettenform aufweisen und einseitig wenigstens einen Schlitz haben, durch welchen die speicherfolie insbesondere aus einer Hülle , insbesondere einer Hygienehülle, heraus, in den Träger einführbar ist. Auf diese Weise kann die Speicherfolie hygienisch, ohne dass sie berührt werden meß, beispielsweise direkt aus der einseitig geöffneten Hygienehülle dem Träger zugeführt werden.

Ferner kann der Träger auf einer der Leseseite der Speicherfolie zugewandten Seite wenigstens einen Rahmen aufweisen, an welchem die Speicherfolie positioniert ist. Durch den Rahmen wird der erforderliche Abstand zwischen dem Laser oder der entsprechenden Leselichtquelle beziehungsweise einem Detektor und der Leseseite der Speicherfolie reproduzierbar festgelegt.

Anstelle oder zusätzlich zum Rahmen kann der Träger auf der der Leseseite der Speicherfolie zugewandten Seite, also abtastseitig, wenigstens eine glasklare und entsprechend der Leseeinrichtung ebene oder gekrümmte insbesondere kratzunempfindliche und/oder schmutzabweisende Platte aufweisen, an welcher die Speicherfolie positioniert ist. Dadurch dass diese glasklare Fläche kratzunempfindlich beziehungsweise schmutzabweisend ist, wird verhindert, dass Schmutz beziehungsweise Kratzer sich in dem gescannten Bild abzeichnen.

Um den Verschleiß der Speicherfolie durch Reibung an dem Rahmen beziehungsweise der Platte beim Einschieben zu reduzieren, kann zweckmäßigerweise der Träger einen verschließbaren Deckel aufweisen, mit dem die Speicherfolie im Träger fixierbar ist. Die Speicherfolie ist mit dem Deckel erst nach dem Einführen durch den insbesondere eine Klappe aufweisenden Schlitz beispielsweise an dem Rahmen beziehungsweise der Platte anpressbar.

Der Träger kann außerdem wenigstens zwei Nuten zur Aufnahme von wenigstens zwei insbesondere gegenüberliegenden Rändern der Speicherfolie aufweisen. In den Nuten ist die Speicherfolie an wenigstens zwei Seiten beim Einschieben fünrbar und wird mit diesen in ihrer Endposition gehalten.

Um die Speicherfolie im Träger zu halten, kann der Träger auch ein magnetisch wirkendes Haltemittel für die Speicherfolie aufweisen, insbesondere kann wenigstens ein Teil des Trägers permanentmagnetisch und die Speicherfolie kann auf ihrer einer Leseseite abgewandten Rückseite mit einer diamagnetischen Folie beschichtet sein. Die Speicherfolie wird durch magnetische Kräfte an die entsprechende Fläche des Trägers angezogen und dort festhalten. Sie kann auf diese Weise sehr einfach positioniert werden und ohne Rückstände zu hinterlassen wieder ehtfernt werden.

Der Träger kann stattdessen wenigstens eine elektrostatisch aufgeladene Fläche zum Halten der Speicherfolie umfassen, wobei die Fläche insbesondere eine erste elektrostatisch aufgeladene Funktionsschicht aufweisen und auf der von der Leseseite abgewandten Rückseite der Speicherfolie eine mit der ersten Funktionsschicht zusammenwirkende zweite Funktionsschicht aufgebracht sein kann. Auf magnetische Bauteile kann hier vbrteilhafterweise verzichtet werden.

Alternativ oder zusätzlich kann der Träger eine insbesondere erneuerbare Haftschicht, beispielsweise eine doppelseitige Klebefolie, aufweisen, die die Speicherfolie hält. Durch Haftschichten können stabile Verbindungen realisiert werden. Beim Austausch der Speicherfolie kann die Haftschicht dann erneuert und der Träger/die Speicherfolie wiederverwenden werden.

Auf magnetisch oder elektrostatisch wirkende Bauteile und/oder Klebstoffe kann bei einer weiteren alternativen Ausführungsform verzichtet werden, bei der der Träger ein mit Unterdruck wirkendes Haltemittel zum Halten der insbesondere eine glatte Rückseite aufweisenden Speicherfolie umfasst, wobei das Haltemittel insbesondere einen Federkolben zum Erzeugen eines Unterdrucks und Dichtungsmittel, insbesondere wenigstens einen O-Ring, zum Abdichten eines mit dem Unterdruck beaufschlagen, an die Rückseite der Speicherfolie angrenzenden Bereichs aufweisen kann. Hier wird die Speicherfolie durch Unterdruck auf der entsprechenden Fläche des Trägers festgehalten. Mit dem Federkolben kann unter Zuhilfenahme der Dichtungsmittel ein dauerhafter Unterdruck erzeugt werden, mit dem die Speicherfolie lange gehalten werden kann. Gegenüber der glatten Rückseite der Speicherfolie kann sehr gut abgedichtet werden.

Bei einer weiteren vorteilhaften Ausführungsform kann der Träger wenigstens eine Anlegekante als Positionierhilfe für die Speicherfolie aufweisen. Insbesondere bei der Verwendung von magnetisch, elektrostatisch oder mit Unterdruck wirkenden oder mit einer Häftschicht versehenen Haltemitteln wird mit der Anlegekante die Positionierung der speicherfolie im beziehungsweise auf dem Träger deutlich vereinfacht.

Bei einer weiteren vorteilhaften Ausführungsform kann der Träger wenigsten eine Klemmeinrichtung zum Halten der Speicherfolie aufweisen, wobei die Klemmeinrichtung insbesondere zwei zusammenwirkende Klemmelemente, die gegenüberliegenden Rändern der Speicherfolie zugeordnet sind, oder ein Klemmelement und eine mit diesem zusammenwirkende Anlegeschiene, die einem dem Klemmelement gegenüberliegenden Rand der Speicherfolie zugeordnet ist, umfassen; insbesondere die an die Ränder der Speicherfolie angreifenden Bereiche der Klemmeinrichtung können aus einem gummielastischen Material sein.

Bei zylinderförmigen Trägern können die Speicherfolien zweiseitig, bei ebenen Trägern an allen Seiten, durch Klemmelemente beispielsweise in Form von Federrasten gehalten werden. Das gummielastische Material, mit dem die Oberflächen der Klemmelemente vorzugsweise überzogen sein können, verhindert, dass die Ränder der Speicherfolie beschädigt werden. Der technische Aufwand kann durch die Verwendung von einer festen Anlegeschiene und gegenüberliegenden Klemmelementen deutlich reduziert werden.

Das Antriebsmittel für Träger beziehungsweise das zusätzliche Antriebsmittel für Speicherfolie ohne Träger kann wenigstens ein Transportband oder wenigstens eine angetriebene Walzen- oder Räderstraße umfassen.

Bei einer weiteren vorteilhaften Ausführungsform kann der Träger beziehungsweise die Speicherfolie ohne Träger ein insbesondere entfernbares Schutzmittel, insbesondere einen lichtdichten Schutzdeckel, aufweisen, wobei das Schutzmittel ein insbesondere formschlüssiges, magnetisch oder adhäsiv wirkendes, insbesondere mit einer Klebeschicht versehenes, Verbindungselement zum Träger umfasst.

Das Verbindungselement kann vorzugsweise eine sich insbesondere vor dem Auslesen automatisch lösbare und danach automatisch schließbare Schiebe- oder Steckverbindung, aufweisen.

Vorzugsweise kann das Schutzmittel bei der Einführung in Transportrichtung vor der Leseeinheit und bei der Herausfühxung in Transportrichtung nach der Leseeinheit insbesondere automatisch entfernbar sein. Dies hat den Vorteil, dass der Träger bei Betrieb der Vorrichtung in beleuchteten Räumen außerhalb des eigentlich Lesebereichs, insbesondere bis zum Einführen des Trägers beispielsweise in einen Transportschacht eines Scanners, lichtgeschützt ist.

Zweckmäßigerweise kann das entfernbare Schutzmittel wenigstens in einem Bereich der lichtempfindlichen Schicht der Speicherfolie dünnwandig und aus einem Material hoher Röntgentransparenz, insbesondere aus Aluminium oder aus mit Carbonfaser gefülltem Kunststoff, sein. So kann beispielsweise das Schutzmittel nach der Anwendung insbesondere mit bidirektionalen Führungsmitteln wieder mit der Speicherfolie beziehungsweise dem Träger mit der Speicherfolie verbunden werden, so dass nachfolgend direkt die Röntgenbelichtung ohne weiteren Handhabungsaufwand des Nutzens erfolgen kann. Dies ist insbesondere bei der Verwendung in medizinischen Bereichen von Vorteil, da nur wenige Handgriffe erforderlich sind, wodurch die Hygienebedingungen deutlich verbessert werden.

Um den Träger mit der Speicherfolie /die Speicherfolie ohne Träger direkt in ein Röntgengerät einsetzen zu können, kann das Schutzmittel die Form einer Röntgenkassette haben und innenliegende Führungsmittel für die Speicherfolie beziehungsweise den Träger aufweisen.

Bei einer weiteren vorteilhaften Ausführungsform kann der Träger wenigstens ein insbesondere rastbares Gelenk aufweisen, mit dem er an das Profil des Transportweges anpassbar ist. Dies ist besonders vorteilhaft beispielsweise bei der Verwendung von Speicherfolien mit großflächigen, ebenen Aufnahmegeometrien beispielsweise bei Panorama-, Ceph- oder medizinischen Formaten in Verbindung mit einer kreisförmigen Auslesung.

In diesem Fall kann der Träger bereits bei der Belichtung mit einem abstreifbaren, insbesondere einem für Röntgenstrahlung durchlässigen Lichtschutzdeckel ausgestattet werden. Rastbare Gelenke ermöglichen dann den Träger in die für die Leseeinrichtung erforderliche, bei Trommelscannern insbesondere zylindrische Form zu bringen.

Ferner können auch die Außenmaße des Trägers standardisiert sein. Um die Ausgestaltung des Transportweges innerhalb der Vorrichtung zu vereinfachen, ist es zweckmäßig wenn die Träger einheitliche Außenabmessungen haben. Bei der verwerdung von kleineren Speicherfolienformaten kann ein Träger auch mit mehreren Speicherfolien bestückt werden.

Die Vorderseice des Trägers und gegebenenfalls die des Schutzmittels kann formschlüssig zur Rückseite des Trägers und/oder des Schutzmittels sein. Dies ist für eine einfache Handhabung und eine platzeparende Lagerung der Trägers von Vorteil, da mehrere Träger insbesondere mit den Schutzmitteln hintereinander oder aufeinander nahezu abstandsfrei gelagert werden können.

Besonders vorteilhaft kann wenigstens eine schlitzförmige Öffnung in einem Gehäuse der Vorrichtung zum Einführen und/oder zum Herausführen des Trägers beziehungsweise der Speicherfolie ohne Träger vorgesehen sein; insbesondere kann die Öffnung lichtdicht verschließbar sein.

Vorzugsweise können eine schwenk- oder schiebbare Klappe oder eine Bürste vorgesehen sein, mit der die öffnung gegenüber Außenlicht abgedichtet sein kann. Die Klappe beziehungsweise die Bürste kann so auegeführt sein, dass sie bei dem Einführen beziehungsweise Herausführen des Trägers an der Außenkontur des Trägers anliegen und mit dessen Kontur einen möglichst geringen Spalt bilden. Da sowohl eine Klappe als auch eine Bürste immer einen Andruck gegenüber dem Träger beziehungsweise gegenüber der Speicherfolie ohne Träger aufweist, ist die Klappe oder Bürste am Einführschlitz beziehungsweise Ausgabeschlitz (um Verschleiß und Kratzer auf speicherfolienleseseite zu vermeiden) nicht auf der Leseseite, sondern vorzugsweise auf der Rückseite des Trägers beziehungsweise der Speicherfolie anordnet.

Um den Träger beziehungsweise die Speicherfolie ohne Träger entlang des Transportweges insbesondere über einen Abtastschlitz der Leseeinrichtung zu führen, kann das Führungsmittel für den Träger und/oder die Speicherfolie ohne Träger wenigstens eine Führungsschiene oder -nut aufweisen.

Ein nahezu reibungsfreier Transport bei einem Reibschluss des Trägers mit dem Führungsmittel kann bei einer weiteren vorteilhaften Ausführungsform ermöglicht werden, bei der einander berührende, relativ zueinander gleitende Oberflächen des Führungsmittel und des Trägers eine einen kleinen Gleitreibungakoeffizienten realisierende Materialpaarung aufweisen, insbesondere POM auf Stahl oder PTFE auf hart anodisiertem Aluminium.

Alternativ können der Träger und/oder das Führungsmittel in aneinander angrenzenden Bereichen umlaufende Kugelführungen oder magnetisch wirkende Trägerführungselemente oder Trägerführungselemente mit Luftlagerungen aufweisen, um die Reibung zu verringern.

Aus dem gleichen Grund kann der Träger insbesondere kugelgelagerte Räder aufweisen, die auf dem Führungsmittel laufen.

Um eine schnelle Zufuhr von mehreren Trägern zu ermöglichen, kann ein Bereich zur Aufnahme. von einer Vielzahl von Trägern beziehungsweise Speicherfolien ohne Träger in Transportrichtung vor der Leseeinrichtung vorgesehen sein. Insbesondere kann eine Führungsschiene oder -nut in diesem Bereich entsprechend verlängert sein. Ein Teil des Führungsmittels, insbesondere die Führungsschienen, kann sich auch in einen Bereich in Transportrichtung betrachtet vor der Einfuhröffnung erstrecken.

wenigstens ein Teil des Transportwegs kann mäanderförmig verlaufen, wodurch eventuell einfallendes Licht insbesondere vor einem Auslesebereich, beispielsweise einem Abtastschlitz der Leseeinrichtung, abgeblockt wird.

Zu diesem Zweck kann der Transportweg wenigstens teilweise auch in einem innen geschwärzten Transportschacht verlaufen.

Um einen möglichst schlupffreien Transport zu ermöglichen und ein Verkratzen der Leseseite der Speicherfolie zu vermeiden, können zweckmäßigerweise der Träger beziehungsweise die Speicherfolie ohne Träger antreibende berührende Bereiche des Antriebsmittels beziehungsweise des zusätzlichen Antriebsmittels mit einem elastischen, eine hohe Mitnahmekraft erzeugenden Material, insbesondere mit Gummi oder Silikon, beschichtet sein.

Der Transportweg kann im Wesentlichen vertikal von oben nach unten verlaufen. Der Träger beziehungsweise die Speicherfolie ohne Träger wird dann durch die Schwerkraft bewegt, so dass lediglich im Bereich der Leseeinrichtung und gegebenenfalls im Bereich einer Löscheinrichtung entsprechende Antriebsmittel erforderlich sind, welche den Träger beziehungsweise die Speicherfolie ohne Träger in der erforderlichen Geschwindigkeit entlang des Auslesebereiches beziehungsweise eines Löschbereichs der Leseeinrichtung führt. Dies reduziert den technischen Aufwand und damit die Kosten erheblich.

Es kann eine Luftlagerführung für den Träger beziehungsweise die Speicherfolie ohne Träger vorgesehen sein. Der Träger beziehungsweise die Speicherfolie ohne Träger kann dann luftgelagert beispielsweise in dem Transportschacht geführt werden. Dies hat den vorteil, dass der Träger beziehungsweise insbesondere die Leseseite der Speicherfolie ohne Träger berührungs- und damit verschleißfrei geführt wird.

Um Träger und/oder Speicherfolien ohne Träger unterschiedlicher Formate beim Transport seitlich vorzugsweise entlang einer wand in dem Transportschacht zu führen, kann eine seitliche Luftströmung in Richtung einer Anlage des Führungsmittel für den Träger beziehungsweise die Speicherfolie ohne Träger vorgesehen sein, mit der der Träger/die Speicherfolie ohne Träger geführt wird.

Im Übrigen können vereinzelungsmechaniken im Transportweg, insbesondere in den Transportweg eingreifende Hubmagnetachsen oder auf Motorachsen befestigte Hebel, zum Vereinzeln einer Vielzahl von hintereinander entlang des Transportweges geführte Trägern beziehungsweise Speicherfolien ohne Träger realisiert sein.

Durch Zwischenschalten der Vereinzelungsmechaniken können beispielsweise nacheinander in entsprechenden Funktionsbereichen ablaufende Prozesse, insbesondere die Trennung der eingeführten Träger von Schutzmitteln, insbesondere von Lichtschutzdeckeln, und deren Wiederanbringung in einem Trenn-/Verriegelungabereich, das Auslesen der Speicherfolien in einem Lesebereich und das Löschen der Speicherfolien in einem Löschbereich, gesteuert werden. Hierdurch wird verhindert, dass mehrere Träger gleichzeitig in einen der oben genannte Funktionsbereiche eintreten.

Es kann zusätzlich wenigstens ein Mittel zur Bestimmung der Position des Trägers beziehungsweise der Speicherfolie ohne Träger, insbesondere eine Lichtschranke oder ein insbesondere mechanischer Taster, vorgesehen sein. Auf diese Weise können die Transportwege insbesondere im Bereich der Vereinzelungsmechaniken überwacht werden und es kann erfasst werden, ob weitere Träger/Speicherfolien ohne Träger zur Überführung in den nächsten Bereich anstehen. Die Bauteile der jeweils nachfolgenden Prozessstufe können dann, falls keine weiteren Träger zugeführt werden, in einen Standby-Betriebszustand geschaltet werden.

Darüber hinaus kann eine Sammeleinrichtung für herausgeführte Träger beziehungsweise Speicherfolien ohne Träger insbesondere in Transportrichtung nach der Leseeinrichtung mit einem mechanischen, automatisch betätigbaren Schieber zum Schieben der herausgeführten Träger beziehungsweise Speicherfolien ohne Träger angeordnet sein. Auf diese Weise kann eine Mehrzahl von Trägern beziehungsweise Speicherfolien ohne Träger insbesondere hintereinander aufgereiht im Ausgabebereich Platz finden. Mit dem Schieber können beispielsweise bei vertikaler Transportrichtung die Träger beziehungsweise Speicherfolien ohne Träger von dem Führungsmittel horizontal um mindestens eine Trägerdicke beziehungsweise Speicherfoliendicke von dem Ausgabebereich weggeschoben werden. Das Führungsmittel kann hierzu gegebenenfalls im Ausgabebereich offenbar sein.

Aus Platzgründen kann es vorteilhaft sein, die Träger beziehungsweise Speicherfolien ohne Träger zu kippen und horizontal ausgerichtet geschichtet zu stapeln. Damit nacheinander folgend alle Träger beziehungsweise Speicherfolien ohne Träger auf das gleiche Niveau kippen, kann arveckmäßigerweise die sammeleinrichtung als Stapeleinrichtung für die Träger beziehungsweise die Speicherfolien ohne Träger ausgebildet sein und ein Mittel zur Höhenkompensation, insbesondere eine federgespannte Auflagefläche, aufweisen. Die federgespannte Auflagefläche ist unter dem Stapel angeordnet. Sie senkt sich um eine Trägerdicke beziehungsweise Speicherfoliendicke ab, wenn ein weiterer Träger beziehungsweise eine weitere Speicherfolie auf den Stapel gelegt wird und so das aufliegende Gewicht um das eines Trägers beziehungsweise einer Speicherfolie zunimmt. Auf diese Weise befindet sich der jeweils oben liegende Träger beziehungsweise die oben liegende Speicherfolie immer auf gleichem Niveau.

Zusätzlich kann die Sammeleinrichtung ein Stützmittel, insbesondere wenigstens eine mechanische Raste, für herausgeführte Träger beziehungsweise Speicherfolien ohne Träger aufweisen. Dies hat, insbesondere wenn die Träger beziehungsweise Speicherfolien ohne Träger mit ihrer Längsachse in vertikaler Richtung hintereinander aufgestellt werden, den Vorteil, dass sie beispielsweise bei Erschütterungen gegen Umfallen gesichert sind. Zweckmäßigerweise können die Stützmittel in horizontaler Richtung jeweils im Abstand einer Trägerdicke beziehungsweise Speicherfoliendicke angeordnet sein.

Um die Träger beziehungsweise Speicherfolien ohne Träger einfach mit den Fingern entnehmen zu können, kann die Sammeleinrichtung wenigstens einen Griffausschnitt als Hilfe zur Entnahme der Träger beziehungsweise der Speicherfolien ohne Träger aufweisen.

Im Übrigen kann das Führungsmittel bidirektional sein und das Antriebsmittel/das zusätzliche Antriebsmittel kann bidirektional wirken. Dies hat den Vorteil, dass beispielsweise bei der Verwendung eines Schutzmittels für den Träger beziehungsweise die Speicherfolie ohne Träger diesen/diese nach dem Lesevorgang wieder in dasselbe Schutzmittel zurückbefördert werden kann. Überdies kann so auf eine separate Herausführungsöffnung verzichtet werden. Es kann aber auch nur ein Teil des Führungsmittels im Lesebereich beziehungsweise im Löschbereich bidirektional sein. Der Träger/die Speicherfolie ohne Träger können dort beispielsweise über eine Abzweigung von einem in einer Richtung durchfahrbaren Haupttransportweg mit dem entsprechenden bidirektional wirkenden Antriebsmittel in den Lesebereich/Löschbereich geschoben werden. Nach dem Lese-/Löschvorgang kann dann der Träger/die Speicherfolie ohne Träger mit dem Antriebsmittel in die Gegenrichtung über die Abzweigung zurück zum Haupttransportweg und in diesem in Haupttransportrichtung weiter transportiert werden.

Im Übrigen kann die Vorrichtung eine Steuereinrichtung aufweisen, mit der der Transport, gegebenenfalls das Trennen und Zusammenfügen der Träger und der Schutzmittel, das Auslesen und/oder gegebenenfalls das Löschen der Speicherfolie gesteuert und vorzugsweise wenigstens zu einem Teil automatisch durchgeführt wird.

Ausführungsbeispiele der Erfindung werden nachfolgend anhand der Zeichnung näher erläutert; es zeigen
- Figur 1: schematisch eine Explosionszeichnung eines ersten Ausführungsbeispiels eines kassettenförmigen Trägers für zwei Speicherfolien zur Verwendung in einem Trommelscanner, hier mit einem Lichtschutzdeckel;
- Figur 2: schematisch einen Schnitt senkrecht zur Längsrichtung des Trägers aus Figur 1 hier ohne Lichtschutzdeckel, wobei ein Deckel des Trägers in halb geöffneter Binschubstellung zum Einschieben der Speicherfolien gezeigt ist;
- Figur 3: schematisch eine Ansicht des Trägers aus Figur 1 in Längsrichtung betrachtet, wobei der Deckel hier geschlossen ist;
- Figur 4: schematisch eine Seitenansicht des Trägers aus Figur 1, wobei hier der Lichtschutzdeckel von der Leseseite auf den Träger gesteckt ist;
- Figur 5: schematisch eine deckelseitige Ansicht des Trägers aus Figur 1 mit Lichtschutzdeckel;
- Figur 6: schematisch einen Längsschnitt eines zweiten Ausführungsbeispiels eines Trägers für eine Speicherfolie, wobei der Träger zwei Nuten zum Einschieben und Halten der Speicherfolie aufweist;
- Figur 7: schematisch einen Längsschnitt eines dritten Ausführungsbeispiels eines Trägers für eine Speicherfolie, wobei der Träger zwei Federrasten zum Halten der Speicherfolie aufweist;
- Figur 8: schematisch einen Schnitt senkrecht zur Transportrichtung eines Antriebsmittels eines Scanners für Speicherfolien ohne Träger.

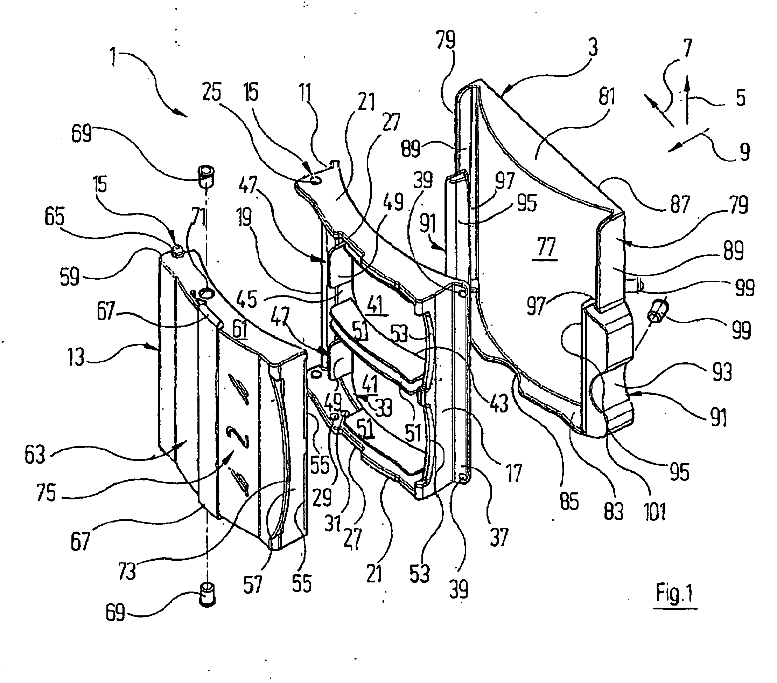

In Figur 1 ist eine insgesamt mit dem Bezugszeichen 1 versehene feste Kassette als Träger für zwei nicht dargestellte rechteckige flexible intraorale Speicherfolien und ein Lichtschutzdeckel 3 für die Kassette 1 gezeigt.

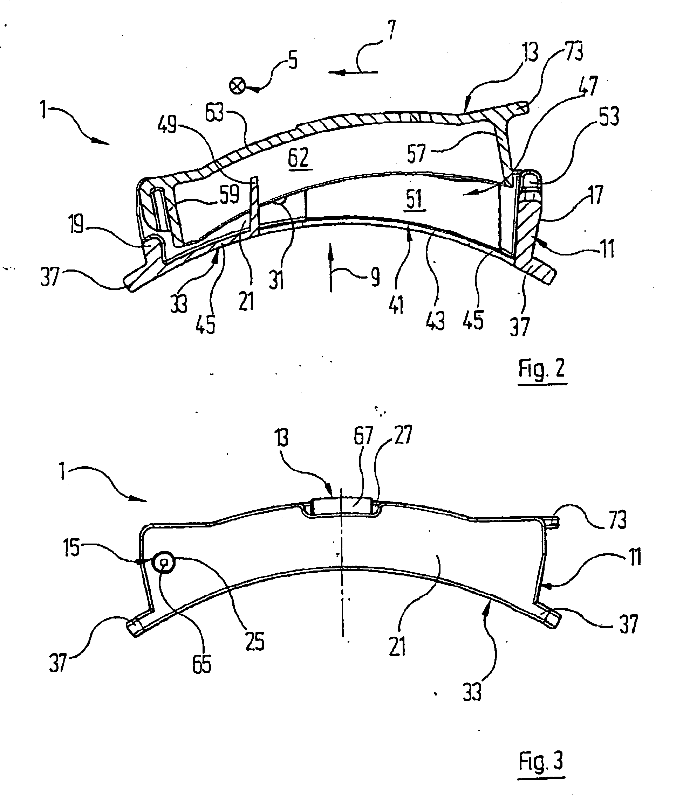

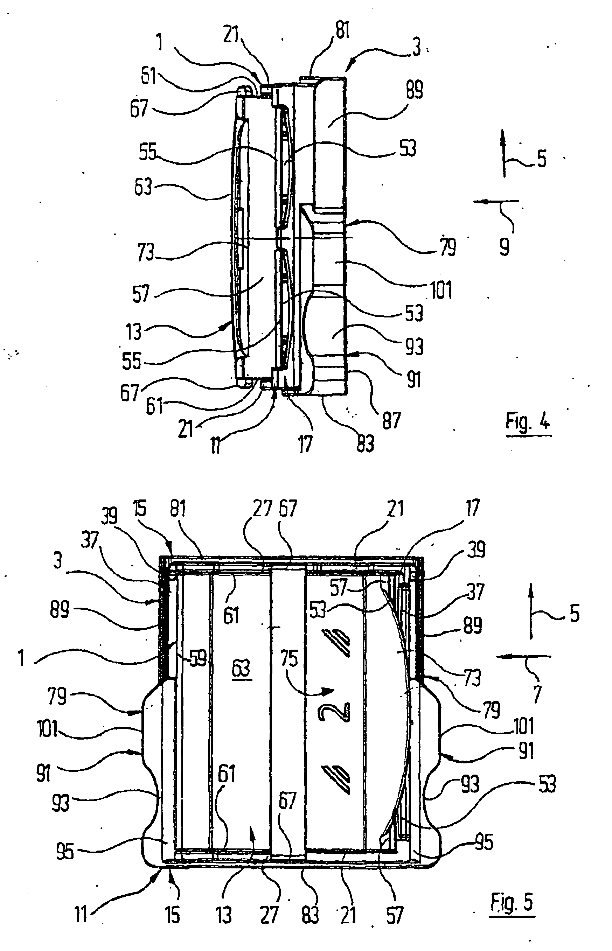

In den Figuren 2, 3 ist die montierte Kassette 1 ohne Lichtschutzdeckel 3 in Längsrichtung 5, in Figur 1 von unten betrachtet im Schnitt beziehungsweise in der Ansicht gezeigt. Figuren 4, 5 zeigen die Kassette 1 mit dem Lichtschutzdeckel 3 in Querrichtung 7 von der Seite, in Figur 1 von rechts unten nach links oben, beziehungsweise in der deckelseitigen Ansicht entgegen einer Leserichtung 9, die in Figur 1 von rechts oben nach links unten verläuft.

Die den Lichtschutzdeckel 3 tragende Kassette 1 ist einem Trommelscanner zum Auslesen der Speicherfolien zuführbar und in Längsrichtung 5 transportierbar. Die in der Kassette 1 untergebrachten Speicherfolien sind in Leserichtung 9 mit einer Leseeinrichtung des Trommelscanners lesbar.

Auf die Kassette 1 ist auf der Leseseite, also in Figur 1 rechts, der Lichtschutzdeckel 3 in Längsrichtung 5, in Figur 1 von unten nach oben, aufschiebbar.

Die mit dem Lichtschutzdeckel 3 verbundene Kassette 1 hat im Wesentlichen die Außenmaße einer konventionellenRöntgenkassette, so dass sie unmittelbar in ein bekanntes Rontgengerät einsetzbar ist. Die Form und die Abmessungen der Kassette 1 im Querschnitt und diejenigen des Transportschachtes in Transportrichtung betrachtet sind im Profil aneinander angepaßt.

Die Leseseite der Kassette 1 ist entsprechend zylindrisch gekrümmt. Die Kassette 1 und der Lichtschutzdeckel 3 sind in Leserichtung 9 betrachtet im Wesentlichen rechteckig.

Die Kassette 1 umfasst einen Grundkörper 11, in Figur 1 in der Mitte, mit einem Deckel 13, der in Figur 1 links gezeigt ist.

Der Deckel 13 ist über zwei vertikal beabstandete Gelenke 15 mit dem Grundkörper 11 schwenkbar verbunden.

Der Grundkörper 11 ist in Längsrichtung 5 begrenzt durch eine glenkferne Längswand 17, in Figur 1 vorne, und eine zu dieser parallelen gelenkseitige Längswand 19 hinten. In Querrichtung 7 ist er begrenzt durch zwei senkrecht zu den Längswänden angeordnete Querwände 21.

Die längeren leseseitigen Ränder der Querwände 21 sind kreiszylinderflächig gekrümmt und auf der der Leseseite abgewandten Rückseite, in Figur 1 links, entgegen der Leserichtung 9 betrachtet mit gleichem Krümmungsmittelpunkt konvex kreiszylinderflächig gekrümmt.

Im Bereich ihrer der gelenkseitigen Längswand 19 zugewandten Enden weisen die Querwände 21 jeweils eine in Längsrichtung 5 durchgängige Gelenkzapfenbohrung 25 auf. Die in Leserichtung 9 betrachtet rückwärtigen Seiten der Querwände 21 haben jeweils in Querrichtung 7 etwa mittig eine Positioniernasenaussparung 27.

Ferner sind in den der jeweils anderen Querwand 21 zugewandten Innenflächen der Querwände 21 jeweils ein nicht durchgehendes inneres Deckelrastloch 29 und ein äußeres Deckelrastloch 31 eingebracht. Die Deckelrastlöcher 29, 31 befinden sich in einem Bereich zwischen den Positioniernasenapssparungen 27 und den Gelenkzapfenbohrungen 25 nahe der Positioniernasenaussparung 27. Sie sind nebeneinander auf dem Bogen eines Kreises, dessen Mittelpunkt durch die axiale Mitte der jeweiligen Gelenkzapfenbohrung 25 verläuft, angeordnet.

Außerdem ist der Grundkörper 11 in dem durch die Längswände 17, 19 und die Querwände 21 begrenzten Bereich leseseitig mit einer Wand 33 versehen. Die vordere Stirnfläche der leseeitigen wand 33 ist Teil der Mantelfläche eines Kreiszylinders, dessen Achse leseseitig in Längsrichtung 5 verläuft. Der Krümmungsmittelpunkt des Kreiszylinders entipricht den Krümmungsmittelpunkte der langen Stirnflächen der Querwänden 21.

Die leseseitige Wand 33 ragt in Querrichtung 7 auf der einen Seite über die gelenkferne Längswand 17 und auf der anderen Seite über die gelenkseitige Längswand 19 gleichermaßen etwas hinaus. Die überstehenden Bereiche bilden jeweils einen in Längsrichtung 5 länglichen Funrungssteg 37.

An beiden Enden der Führungsstege 37, in gleichem Abstand zum entsprechenden Rand, ist in ihren der Leseseite abgewandten Rückseiten jeweils ein Grundkörperrastloch 39 eingebracht. Die Führungssteg 37 sind jeweils spiegelsymmetrisch bezüglich einer senkrecht zur Längsrichtung 5 verlaufenden ersten Spiegelfläche und zueinander spiegelsymmetrisch bezüglich einer senkrecht zur Querrichtung 7 verlaufenden zweiten Spiegelfläche.

Die leseseitigen wand 33 weist darüber hinaus in Längsrichtung 5 hintereinander zwei identische, etwa rechteckige Leseöffnungen 41 auf, die durch einen in Querrichtung 7 verlaufenden Querbereich 43 der leseseitigen Wand 33 voneinander und durch einen umlaufenden Randbereich 45 der leseseitigen Wand 33 von den Längswänden 17, 19 beziehungsweise den Querwänden 21 getrennt sind.

Die Leseöffnungen 41 sind jeweils auf der von der Leseseite abgewandten Rückseite des Querbereichs 43 beziehungsweise des Randbereichs 45 der leseseitigen Wand 33 mit einem rechteckigen, an seinen Ecken offenen Rahmen 47 zur Auflage der Speicherfolien umrandet.

Die Rahmen 47 bestehen aus jeweils zwei paarweise im Wesentlichen parallel zueinander angeordneten Längsrahmenteilen 49 und zwei Querrahmenteilen 51, die senkrecht auf dem Querbereich 43 beziehungsweise dem umlaufenden Randbereich 45 der leseseitigen Wand 33 stehen. Die Rahmenteile 49, 51 sind jeweils rechteckige ebene Platten, wobei die langen Seiten der Querrahmenteile 51 entsprechend der Krümmung der leseseitigen Wand 33 gebogen sind.

Die von der leseseitigen Wand 33 abgewandten Oberseiten der Querrahmenteile 51 sind jeweils bis auf einen kurzen Bereich auf der Öffnungsseite mit dem gleichen Krümmungmittelpunkt wie die leseseitige Wand 33 gebogen, und verlaufen somit parallel zu dieser.

Die kurzen Bereiche der Oberseiten der Querrahmenteile 51 auf der Öffnungsseite der Kassette 1, in Figur 1 rechts unten, sind gerade. Sie schließen sich stufenlos an den gebogenen Bereich an und sind relativ zu diesem von der leseseitigen Wand 33 weg geneigt.

Die entsprechenden Oberseiten der Längsrahmenteile 49 befinden sich in Längsrichtung 5 betrachtet auf gleicher Höhe wie die Verlängerungen der Oberseiten der ihnen zugewandten Enden der Querrahmenteile 51.

Die Höhe der Rahmen 47 in Längsrichtung 5, also der Abstand ihrer Oberseiten zur leseseitigen Wand 33, ist entsprechend dem erforderlichen Abstand zwischen einem Laser beziehungsweise einem Detektor der Leseeinrichtung und der Leseseite der Speicherfolie vorgegeben.

Die von der Leseseite abgewandte Oberseite der gelenfernen Längswand 17 weist zwei von der Leseseite aus in Leserichtung 9 betrachtet konkave Schlitzmulden 53 für entsprechende, weiter unten noch näher beschriebene, Einschubschlitze 55 im Deckel 13 zum Einschieben der Speicherfolien auf. Jede Schlitzmulde 53 ist einem der Rahmen 47 zugeordnet. Die Schlitzmulden 53 ragen in Längsrichtung 5 über die Verlängerungen der geraden Bereiche der Querrahmenteile 51 des entsprechenden Rahmens 47 etwas hinaus. Der Deckel 13 der Kassette 1 weist eine der gelenkfernen Längswand 17 entsprechende öffnungsseitige Deckellängswand 57, eine der gelenkseitigen Längswand 19 entsprechende gelenkseitige Deckellängswand 59 und zwei den Querwänden 21 entsprechende Deckelquerwände 61 auf.

Mittig zwischen den Deckelwanden 61 ist parallel zu diesen eine in Figur 2 sichtbare Deckelmittelquerwand 62 angeordnet. Die von der Leseseite abgewandte Seite des Deckels 13 ist mit einer Deckwand 63 verschlossen.

In Längsrichtung 5 betrachtet sind leseseitige freie Ränder der Deckwand 63, der Deckelquerwände 61 und der Deckelmittelwand 62 im Wesentlichen kreiszylinderförmig gebogen, wobei die entsprechenden Zylinderachsen leseseitig in Längsrichtung 5 verlaufen, und ihre Profile den jeweiligen Profilen der Querrahmenteile 51 im Grundkörper 11 beziehungsweise der leseseitigen Wand 33 entsprechen.

Die Außenmaße des Deckels 13 in Längsrichtung 5 und in Querrichtung 7 sind etwas kleiner als die entsprechenden Innenmaße des Grundkörpers 11. Seine Innenabmessungen in Längsrichtung 5 und in Querrichtung 7 sind etwas größer als die entsprechenden Außenmaße des Rahmens 47 im Grundkörper 11. Der Deckel 13 ist daher mit seinen Wänden 57, 59, 61 voraus in den Zwischenraum zwischen dem Rahmen 47 und den Längswänden 17, 19 beziehungsweise den Querwänden 21 des Grundkörpers 11 in diesen einschwenkbar, wobei seine Deckelmittelquerwand 62 zwischen den beiden inneren Querwänden 21 einschwenkt.

In einer Anpressstellung bei vollständig eingeschwenktem, also geschlossenem Deckel 13 liegt die der Leaeseite zugewandte Innenseite der Deckwand 63 des Deckels 13 an den Oberseiten der Rahmenteile 49, 51 im Grundkörper 11 gerade an und die dort angeordneten, nicht dargestellten Speicherfolien werden so gegen die Rahmen 47 gepresst und fixiert.

Die Höhe in Leserichtung 9 der Deckelquerwände 61, der Deckelmittelquerwand 62 und der Deckellängswände 57, 59 ist jeweils so bemessen, dass ihre leseseitigen Seiten bei geschlossenem Deckel 13 an der leseseitigen Wand 33 des Grundkörpers 11 in deren Querbereich 43 beziehungsweise deren Randbereichen 43 lichtdicht anliegen.

Das Profil des Deckels 13 auf der von der Leseseite abgewandten Seite stimmt in Längsrichtung 5 betrachtet im Wesentlichen mit dem Profil des Lichtschutzdeckels 3 auf der Leseseite überein, so dass mehrere Kassetten 1 in Leserichtung 9 formschlüssig hintereinander platzsparend gelagert werden können.

In der gelenkfernen Deckellängswand 57 sind an ihren leseseitigen Enden in Längsrichtung 5 hintereinander die beiden durchgängigen, zur Leseseite hin offenen Einschubschlitze 55 angeordnet. Durch die Einschubschlitze 55 sind die Speicherfolien in halb geöffneter Einschubstellung des Deckels 13 in die Kassette 1 einschiebbar.

Die Einschubschlitze 55 sind in Längsrichtung 5 etwa so lang wie die Schlitzmulden 53 im Grundkörper 11, eher etwas kürzer. Ihre Breite in Leserichtung 9 ist etwas größer als die Dicke der Speicherfolien.

In der Folien-Bschickungstellung des Deckels 13 sind die Einschubschlitze 55 in Querrichtung 7 von außerhalb der Kassette 1 aus betrachtet hinter den jeweiligen Schlitzmulden 53 frei zugängig, so dass die Speicherfolien dort einschiebbar sind.

In der Anpressstellung werden die Einschubschlitze 55 durch die öffnungsseitige Längswand 17 des Grundkörpers 11 verdeckt, so dass durch sie kein Licht ins Innere der Kassette 1 gelangen kann.

Ferner weisen die Deckelquerwände 61 jeweils im Bereich ihrer gelenkseitigen Enden auf ihren dem Inneren der Kassette 1 abgewandten Außenseiten einen kugeligen Gelenkzapfen 65 auf, deren Achse in Längsrichtung 5 verläuft. Bei montierter Kassette 1 sind die kugeligen Gelenkzapfen 65 in die entsprechenden Gelankzapfenbohrungen 25 in den Querwänden 21 des Grundkörpers 11 eingerastet und bilden mit diesen die Gelenke 15, um die der Deckel 13 zum Verschließen der Kassette 1 und Anpressen der Speicherfolien relativ zum Grundkörper 11 schwenkbar ist.

Außerdem weisen die Deckelquerwände 61 jeweils eine einer der Positioniernasenaussparungen 27 in den Querwänden 21 des Grundkörpers 11 entsprechende, in Querrichtung 7 längliche Positioniernase 67 auf. Die Positioniernasen 67 befinden sich etwa mittig im Bereich der dem Grundkörper 11 abgewandten langen Seiten der Deckelquerwände 61. Sie sind auf deren Außenflächen angebracht und sind einstückig an diese angeformt.

Die Maße der Positioniernasen 67 entsprechen den Innenmaßen der Positioniernasenaussparungen 27. Bei vollständig geschlossenem Deckel 13 stecker die Positioniernasen 67 in den Positioniernasenaussparungen 27 und verhindern so eine laterale Verschiebung des Deckels 13 relativ zum Grundkörper 11.

In jeder Deckelquerwand 61 ist darüber hinaus ein in etwa Kugelrastelement 69 angeordnet, welches bei halb geöffneten Deckel 13 in der Einschubstellung in das entsprechende hintere Deckelrastloch 29 und bei geschlossenem Deckel 13 in der Anpressstellung in das entsprechende vordere Dekkelrastloch 31 einrastet.

Die Kugelrastelemente 69 sind jeweils von außen in entsprechende Bohrungen 71 in den Deckelquerwänden 61 eingesteckt. Der Abstand der Achsen der Kugelrastelemente 69 zu den Achsen der entsprechenden kugeligen Gelenkzapfen 65 entspricht dem Abstand zwischen der Mitte der entsprechenden Gelenkzapfenbohrung 25 und den Mitten der Deckelrastlöcher in den Querwänden 21 des Grundkörpers 11.

In verlängerung der Deckwand 63 ragt über die öffnungsseitige Deckellängswand 57 eine in Längsrichtung 5 längliche Auskragung 73 hinaus, deren freie lange Seite ein von der Öffnungsseite aus in Querrichtung 7 betrachtet konvex gebogenes Profil hat. Die Auskragung 73 dient als Griffhilfe insbesondere beim Aufklappen des Deckels 13.

Im Übrigen weist die Außenfläche der Deckwand 63 auf der Seite der Auskragung 73, von dieser aus lesbar, eine Mehrzahl von Symbolen 75, insbesondere von Ziffern auf. Die Symbole sind mitteln Laserbeschriftung in vorgegebener Größe dauerhaft eingebracht. Sie sind beispielsweise charakteristisch für die Art der Kassette 1 oder sind der Kassette 1 und damit den enthaltenen Speicherfolien individuell zugewiesen. Über die Symbole 75 ist die Kassette 1 identifizierbar.

Der Lichtschutzdeckel 3 umfasst leseseitig eine in Leserichtung 9 betrachtet rechteckige Lichtschutzvorderwand 77 aus dünnwandigem Aluminium.

Die Lichtschutzvorderwand 77 ist kreiszylindrisch gebogen, wobei die Zylinderachse auf der Leseseite in Längsrichtung 5 verläuft. Der Krümmungsmittelpunkt ist identisch mit dem Krümmungsmittelpunkt der leseseitigen Wand 33 des Grundkörpers 11 und dem der Deckwand 63 des Deckels 13.

Die Lichtschutzvorderwand 77 ist mit zwei spiegelsymmetrischen Lichtschutzlängswänden 79, einer in Längsrichtung 5 betrachtet vorderen Lichtschutzquerwand 81, in Figur 1 oben, und einer hinteren Lichtschutzquerwand 83 begrenzt. Das Profil der Lichtschutzvorderwand 77 in Längsrichtung 5 betrachtet und ihre Ausdehnung in Längsrichtung 5 entsprechen dem Profil und der Ausdehnung der leseseitigen Wand 33 des Grundkörpers 11.

Der Abstand in Querrichtung 7 der einander zugewandten Innenseiten der Lichtschutzlängswände 79 in ihren vorderen Hälften, in Figur 1 oben, entspricht dem Abstand in Querrichtung 7 zwischen den der leseseitigen Wand 33 abgewandten Außenseiten der Führungsstege 37 des Grundkörper 11.

Die vordere Seite der Lichtschutzvorderwand 77, in Figur 1 oben, grenzt an die der Leseseite abgewandte Seite der vorderen Lichtschutzquerwand 81 an und ist in Längsrichtung 5 betrachtet entsprechend dem Profil der Lichtschutzvorderwand 77 gebogen. Die der gebogenen Seite gegenüberliegende leseseitige Seite der vorderen Lichtschutzquerwand 81 verläuft gerade.

Die hintere Seite der Lichtschutzvorderwand 77, in Figur 1, unten, stößt senkrecht auf den Innenbereich der hinteren Lichtschutzquerwand 83. Die von der Leseseite abgewandte Seite der hinteren Lichtschutzquerwand 83 ist gebogen und verläuft im Wesentlichen parallel zur Schnittkurve der Lichtschutzvorderwand 77 mit der hinteren Lichtschutzquerwand 83. Sie weist etwa mittig eine Entriegelungsmulde 85 auf.

Durch die Lichtschutzlängswände 79 und die hintere Lichtschutzquerwand 83 wird ein Aufnahmebereich für die Kassette 1 gebildet.

Darüber hinaus geben die Lichtschutzlängswände 79, die vordere Lichtschutzquerwand 81 und die hintere Lichtschutzquerwand 83 eine Begrenzungsfläche 87 vor , gegen die von der Leseseite her eine weitere Kassette 1 mit identischen Außenabmessungen mit ihrem Deckel 13 voraus platzsparend zur Aufbewahrung insbesondere zum Stapeln oder Aneinanderreihen einer Vielzahl von Kassetten 1 mit Lichtschutzdeckeln 3 einsteckbar ist.

Die Lichtschutzlängswände 79 umfassen in ihren vorderen Hälften jeweils einen mit der vorderen Lichtschutzquerwand 81 abschließenden geraden Teil 89, und in ihren hinteren Hälften jeweils einen Halteteil 91 mit einer Griffmulde 93. Der Halteteil 91 überragt in Leserichtung 9 den geraden Teil 89 auf der der Leseseite abgewandten, der Kassette 1 zugewandten Seite.

Die Halteteile 91 umfassen in Querrichtung 7 auf der der jeweils anderen Lichtschutzlängswand 79 zugewandten Seite je einen in Längsrichtung 5 länglichen Haltekragen 95. Die Haltekragen 95 sind in einem Abstand zu der von der Leseseite abgewandten Fläche der Lichtschutzvorderwand 77 an der der Kassette 1 zugewandten Seite der Halteteile 91 angebracht.

Dieser Abstand ist etwas größer als die Dicke der Führungsstege 37 des Grundkörpers 11 in Leserichtung 9. Durch jeweils einen der Haltekragen 95 und die Lichtschutzvorderwand 77 wird jeweils ein nutförmiger, sich in Längsrichtung 5 erstreckender, Bereich 97 begrenzt.

Die Tiefe des Haltekragens 95 in Lesexichtung 9 ist kleiner als der Abstand zwischen dem Führungssteg 37 und den dem Führungssteg 37 zugewandten langen Seiten der Schlitzmulden 53 in der öffnungsseitigen Längswand 17 des Grundkörpers 11, so dass die Schlitzmulden 53 bei aufgestecktem Lichtschutzdeckel 3 frei zugänglich sind (Vgl. Figur 5).

In die nutförmigen Bereiche 97 zwischen den Haltekragen 95 und der Lichtschutzvorderwand 77 sind die Führungsstege 37 des Grundlsörpers 11 in Längsrichtung 5 von vorne, in Figur 1 von oben, einschiebbar, so dass die Kassette 1 im Lichtschutzdeckel 3 formschlüssig gehalten wird.

Im Bereich der der hinteren Lichtschutzquerwand 83 zugewandten Enden der Haltekragen 95 ist in ihrer der Lichtschutzvorderwand 77 zugewandten Fläche jeweils ein Lichtschutzkugelrastelement 99 angeordnet. Die Lichtschutzkugelrastelemente 99 greifen bei in den Lichtschutzdeckel 3 eingeschobener Kassette 1 in die entsprechenden Grundkörperrastlöcher 39 in den Führungsstegen 37 des Grundkörpers 11 ein und fixieren so die Kassette 1 im Lichtschutzdeckel 3.

Die Halteteile 91 weisen darüber hinaus auf der dem jeweils anderen Halteteil 91 abgewandten Außenseite sich in Querrichtung 7 erstreckende Verbreiterungen 101 auf.

In Längsrichtung 5 betrachtet etwa mittig sind dort die von außerhalb des Lichtschutzdeckels 3 in Querrichtung 7 betrachtet zylinderflächig konkav gebogenen Griffmulden 93 vorgesehen.

Der nicht gezeigte Trommmelscanner weist eine bekannte Leseeinrichtung zum punkt-, zeilen- oder blockweise Lesen von auf den Speicherfolien gespeicherten Informationen auf. In Transportrichtung nach der Leseeinrichtung kann eine Löscheinrichtung für die Speicherfolien angeordnet sein.

Ein Transportschacht für Kassetten 1 mit Lichtschutzdekkeln 3 führt im Trommelscanner zur Leseeinrichtung und zur Löscheinrichtung. Er erstreckt sich mäanderformig im Wesentlichen vertikal von oben nach unten. Seine Innenflächen sind geschwärzt.

Im Transportschacht sind Führungsschienen für die Kassetten 1 mit Lichtschutzdeckeln 3 vorgesehen.

Die die Führungsschienen berührenden und an diesen entlanggleitenden Oberflächen der Kassette 1 beziehungsweise des Lichtschutzdeckels 3 sind aus PTFE, die entsprechenden Oberflächen der Führungsschienen aus hart anodisiertem Aluminium.

Der Transportechacht weist an einem Ende in einer Gehäusewand des Trommelscanners eine schlitzförmige Einführöffnung auf, durch die mit Lichtschutzdeckeln 3 versehenen Kassetten 1 einführbar sind und am anderen Ende eine schlitzförmige Ausgabeöffnung durch die die Kassetten 1 mit Lichtschutzdeckeln 3 herausführbar sind.

Die Profile der Einführöffnung und der Ausgabeöffnung in Transportrichtung betrachtet entsprechen den Profilen der Kassetten 1 mit Lichtachutzdeckeln 3 in Längsrichtung 5 betrachtet, wobei ihre Innenmaße etwas größer sind als die entsprechenden Außenmaße der Kassetten 1, so dass diese durch die Öffnungen hindurchpassen.

Die Einführöffnung und die Ausgabeöffnung sind jeweils mittels einer schwenkbaren Klappe gegenüber Außenlicht abgedichtet. Die Klappen greifen auf der der Leseseite der Speicherfolie abgewandten Deckwand 63 des Deckels 13 der Kassette 1 an. Sie sind so ausgestaltet, dass sie bei dem Einführen beziehungsweise Herausführen der Kassette 1 mit dem Lichtschutzdeckel 3 an der Deckwand 63 möglichst spaltfrei anliegen.

Hinter der Einführöffnung weist der Traneportschacht in Transportrichtung vor der Leseeinrichtung einen länglichen Bereich zur Aufnahme einer Mehrzahl von Kassette 1 mit Lichtschutzdeckeln 3 auf. Die Führungsschienen sind in diesem Bereich entsprechend verlängert.

Zum Transportieren der Kassette 1 in dem Transportschacht ist im Bereich der Leseeinrichtung und der Löscheinrichtung eine Transporteinrichtung mit entsprechenden Antriebsmitteln vorgesehen.

Beim Transport greifen die Antriebsmittel ausschließlich an der Kassette 1 beziehungsweise dem Lichtschutzdeckel 3 an. Die Speicherfolien in der Kassette 1 haben keinen direkten Kontakt mit den Antriebamitteln.

Die Leseeinrichtung umfasst einen Laser mit dem die Speicherfolien in der Kassette 1 in bekannter Weise abgescannt werden können, wobei das von den Speicherfolien reflektierte Licht mit einem Photodetektor erfasst werden kann und die Lichtsignale einer bekannten Auswerteeinheit zuführbar sind.

An die Leseeinrichtung schließt sich in Transportrichtung die Löschrichtung an.

Als Lichtquelle zum Löschen der Speicherfolie weist die Löscheinrichtung eine Warmton-Leuchtstoffröhre auf, mit der Beleuchtungstärken von 50.000 1m m⁻² erreicht werden. Dies reicht aus, um die zum Löschen benötigte Lichtmenge von etwa 500.000 1m a bereitzustellen und die für einen quasikontinuierlichen Ausleseprozess mit einem hohen Durchsatz für eine Vielzahl von Speicherfolien erforderliche kurze Löschdauer zu erreichen.

Die für das Löschen notwendige Löschdauer ist an die Auslesedauer für die Speicherfolien angepasst, die durch die Nachleuchtdauer des speicherleuchtstoffs auf eine Mindestdauer begrenzt wird. Bei Speicherfolien mit dem Speicherleuchtstoff BaFBr:Eu beträgt die Nachleuchtdauer nach dem Bestrahlen mit dem Laser beim Auzleseprozess 680 ns. Bei den intraoralen Speicherfolien liegt die Auslesedauer daher in der Größenordnung von 10 s.

Leuchtstoffröhren haben darüber hinaus einen hohen Energiewirkungsgrad und bewirken daher eine geringe Erwärmung, so dass sie die Speicherfolien nicht durch Erwärmung beschädigen.

Zwischen der zu löschenden Speicherfolie und der Leuchtstoffröhre ist ein optisches Kantenfilter aus Kunststofffolie angeordnet. Mit diesem werden unerwünschte Spektralanteile absorbiert und nur die erwünschten Spektralanteile mit Wellenlängen oberhalb von etwa 480 nm transmittiert. Mit dem Kantenfilter wird auch ein Übersprechen des Löschlichtes der Leuchtstoffröhre auf das PSL-Signal eines Photodetektors der Leseeinrichtung verhindert, weil ein Blau-Filter vor dem Photodetektor nur Wellenlängen unterhalb von etwa 450 nm transmittiert und somit das gefilterte Löschlicht abblockt.

Ferner sind vor der Leseeinrichtung und vor der Löscheinrichtung in den Transportschacht eingreifende Hubmagnetachsen zum vereinzeln einer Mehrzahl von hintereinander transportierten Kassetten 1 mit Lichtschutzdeckeln 3 angeordnet. Die Hubmagnetachsen sind mit einer Steuereinrichtung steuerbar verbunden. Durch Zwischenschalten der Hubmagnetachsen werden nacheinander ablaufende Prozesse, nämlich die Trennung der eingeführten Kassetten 1 von den Lichtschutzdeckeln 3, das Auslesen der Speicherfolien und das Löschen der Speicherfolien, koordiniert und gesteuert. Hierzu greift nach einem Weitertransport einer Kassette 1 in den Lesebereich beziehungsweise in den Löschbereich die entsprechende Hubmagnetachse hinter der Kassette 1 in den Transportschacht ein und verhindert so, dass eine nachfolgende Kassette 1 in den entsprechenden Funktionsbereich nachrutscht.

Unmittelbar vor jedem Funktionsbereich, insbesondere vor der entsprechenden Hubmagnetachse, ist je eine Lichtschranke angeordnet, die mit der Steuereinrichtung funktionell verbunden sind. Mit den Lichtschranken ist erfassbar, ob weitere Kassetten 1 zur Überführung in den entsprechenden Funktionsbereich anstehen. Die Bauteile der jeweils nachfolgenden Funktionsbereiche werden dann, falls keine weiteren Kassetten 1 anstehen, in einen Standby-Betriebszustand geschaltet.

Darüber hinaus ist eine Trenn-/Verbindungseinrichtung vorgesehen. Mit der Trenn-/Verbindungseinrichtung ist die Kassette 1 vor dem Auslesen von dem Lichtschutzdeckel 3 trennbar und nach dem Löschen wieder mit diesem verbindbar.

Die Trenn-/Verbindungseinrichtung weist ein Fixiermittel auf, mit dem der Lichtschutzdeckel 3 fixierbar ist. Außerdem umfasst sie ein Entriegelungs-/verriegelungsmittel mit dem die Kassette 1 aus dem fixierten Lichtschutzdeckel 3 heraus beziehungsweise in diesen hinein geschoben werden kann.

In Transportrichtung nach der Leseeinrichtung und der Löscheinrichtung hinter der Ausgabeöffnung des Transportschachts mündet der Transportschacht in einen Ausgabebereich mit einer Sammeleinrichtung zum Aufreihen von herausgeführten Kassetten 1 mit Lichtschutzdeckeln 3 in einem Sammelbehältnis der Sammeleinrichtung. Im Bereich des Ausgabebereichs verläuft der Transportschacht mit der Führungsschiene vertikal.

Die Sammeleinrichtung weist einen mechanischen, automatisch betätigbaren Schieber zum Schieben der herausgeführten Kassetten 1 mit Lichtschutzdeckeln 3 auf. Mit dem Schieber sind die Kassetten 1 mit Lichtschutzdeckeln 3 im Ausgabebereich von der Führungsschiene horizontal mindestens um die Dicke, nämlich die Dimension in Figur 1 in Leserichtung 9, der Kassetten 1 mit Lichtschutzdeckel 3 weg zum Sammelbehältnis schiebbar. In dem Sammelbehältnis können die herausgeführten Kassetten 1 mit Lichtschutzdekkeln 3 hintereinander aufgereiht werden.

Zusätzlich weist die Sammeleinrichtung eine Vielzahl mechanischer Rasten auf, die im Sammelbehältnis in horizontaler Richtung jeweils im Abstand der Dicke der Kassetten 1 mit Lichtschutzdeckel 3 angeordnet sind. Mit den mechanischen Rasten können die aufgereihten Kassetten 1 mit Lichtschutzdeckeln 3 auch bei Erschütterungen gegen Umfallen gestützt werden.

Das Sammelbehältnis weist darüber hinaus einen Griffausschnitt zur Erleichterung der Entnahme der aufgereihten Kassetten 1 mit Lichtschutzdeckeln 3 auf.

Die intraoralen Speicherfolien sind zunächst in bekannten Hygienehüllen lichtdicht verpackt. Die erste Röntgenbelichtung erfolgt in den Hygienehüllen.

Um die Kassette 1 mit den zuvor in bekannter Weise belichteten Speicherfolien zu bestücken, wird zunächst der Deckel 13 der Kassette 1 in die halb offene Einschubstellung gebracht, in der seine Kugelrastelemente 69 in die oberen Deckelrastlöcher 29 einrasten.

Durch jeden der Einschubschlitze 55 wird eine Speicherfolie direkt aus einer der jeweils an einer Seite aufgerissenen intraoralen Hygienehüllen von der öffnungsseite aus in Querrichtung 7 in die Kassette 1 eingeschoben. Hierbei gleiten die Ränder der Speicherfolien über die Oberseiten der Querrahmenteile 51 im Grundkörper 11. Anschließend wird der Deckel 13 vollständig geschlossen, wobei die Kugelrastelemente 69 aus den oberen Deckelrastlöchern 29 ausrasten und in der Anpresstellung in die jeweiligen unteren Deckelrastlöcher 31 einrasten.

Die Speicherfolien werden in der Anpressstellung mit der Deckwand 63 des Deckels 13 gegen die Rahmen 47 im Grundkörper 11 gepresst und fixiert.

Die befüllte Kassette 1 wird anschließend in den Lichtschutzdeckel 3 eingeschoben. Hierzu wird zunächst die Kassette 1 in Leserichtung 9 mit den hinteren Hälften der Führungsstege 37, in Figur 1 unten, voraus im Bereich der vorderen geraden Teile 89 der Lichtschutzlängswände 79 auf den Lichtschutzdeckel 3 gesteckt. Die leseseitige Wand 33 des Grundkörpers 11 liegt nun an der Lichtschutzvorderwand 77 formschlüssig an.

Die Kassette 1 wird dann relativ zum Lichtschutzdeckel 3 in Längsrichtung 5 in Richtung der Halteteile 91 geschoben. Hierbei werden die Führungsstege 37 in den nutförmigen Bereichen 97 zwischen den Haltekragen 95 der Halteteile 91 und der Lichtschutzvorderwand 77 geführt. In der Endstellung der Kassette 1 im Lichtschutzdeckel 3 rasten die Kugelrastelemente 69 des Lichtschutzdeckels 3 in die entsprechenden Grundkörperrastlöcher 39 ein und fixieren die Kassette 1 im Lichtschutzdeckel 3.

Da die Führungsetege 37 des Grundkörpers 11 symmetrisch sind und in Längsrichtung 5 vorn und hinten jeweils ein Grundkörperrastloch 39 aufweisen, kann die Kassette 1 auch mit ihrer vorderen Seite, in Figur 1 oben, voran in den Lichtschutzdeckel 3 geschoben werden.

Die Kassette 1 mit Lichtschutzdeckel 3 wird nun in Längsrichtung 5 mit der Vorderseite voran in die Einführöffnung des Transportkanals eingesteckt, dort durch die Führungsschienen in Transportrichtung geführt und durch die Schwerkraft angetrieben dem Lesebereich zugeführt.

Bei Erreichen des Lesebereichs wird die Kassette 1 mit dem Lichtschutzdeckel 3 mit der dortigen Hubmagnetachse gestoppt und von der entsprechenden Lichtschranke erfasst. Sofern der Lesebereich frei ist, sich also keine vorherige Kassette 1 dort aufhält, wir die Hubmagnetachse automatisch aus dem Transportschacht gezogen, die Kassette 1 weiter befördert und danach die Hubmagnetachse wieder in den Transportschacht eingefahren, um das Nachrutschen einer gegebenfalls folgenden Kassette 1 zu verhindern.

Der Lichtschutzdeckel 3 wird an den Griffmulden 93 der Halteteile 91 automatisch mit dem Fixiermittel der Trenn-/Verbindungseinrichtung fixiert und die Kassette 1 durch Drücken mit dem Entriegelungs-/Verriegelungsmittel im Bereich der Entriegelungsmulde 85 in der hinteren Lichtschutzquerwand 83 in Längsrichtung 5 gegen den Widerstand der Kugelrastelemente 69 automatisch aus dem Lichtschutzdeckel 3 herausgedrückt und mit dem der Leseeinrichtung zugeordneten Antriebsmittel in den Lesebereich hinein geschoben.

Im Lesebereich werden die Speicherfolien in bekannter Weise ausgelesen.

Anschließend wird die Kassette 1 zur Hubmagnetachse der Löscheinrichtung transportiert und von der dortigen Lichtschranke erfasst, Die dortige Hubmagnetachse wird, sofern der Löschbereich frei ist, automatisch aus dem Transportschacht gezogen und die Kassette 1 mit dem dortigen Antriebsmittel in den Löschbereich transportiert. Anschließend wird die Hubmagnetachse automatisch wieder in den Transportschacht geschoben, um das Nachrutschen einer weiteren Kassette 1 zu verhindern.

Im Löschbereich werden die Speicherfolien gelöscht und anschließend zurück zur Trenn-/Verbindungseinrichtung befördert. Mit dieser wird die Kassette 1 mit den Speicherfolien wieder in den Lichtschutzdeckel 3 geschoben.

Die Kassette 1 mit Lichtschutzdeckel 3 wird anschließend durch den Transportschacht und durch dessen Ausgabeöffnung hindurch der Sammeleinrichtung zugeführt und im Sammelbe - hältnis entsprechend gelagert. Von dort aus wird sie manuell entnommen und direkt ohne weiteren Handhabungsaufwand des Nutzers für eine neue Röntgenbelichtung verwendet.

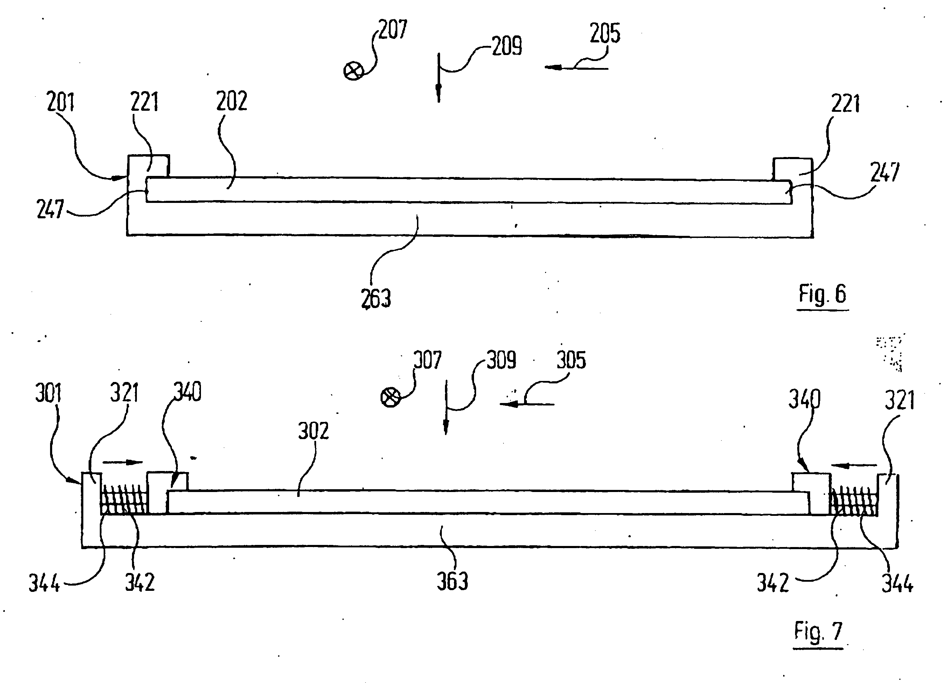

In Figur 6 ist ein zweites Ausführungsbeispiel eines Trägers für eine der in Verbindung mit dem ersten Ausführungsbeispiele beschriebenen und in Figur 6 gezeigten Speicherfolie 202 zur Verwendung in dem dort erläuterten Trommelscanner im Längsschnitt dargestellt.

Der Träger 201 hat eine von der Leseseite aus, in Figur 6 von oben, in Leserichtung 209 betrachtet, in Figur 6 nach unten, rechteckige Rückwand 263. Sie ist kreiszylindrisch gebogen, wobei die entsprechende Zylinderachse leseseitig in Längsrichtung 205, in Figur 6 horizontal, verläuft. Der Krümmungsmittelpunkt entspricht den Krümmungsmittelpunkte der kreiszylindrischen Flächen im ersten Ausführungsbeispiel, also den für den Trommelscanner erforderlichen Krümmungsmittelpunkte.

Die Rückwand 263 ist in Figur 6 links und rechts durch je eine Querwand 221 begrenzt. Die Querwände 221 erstrecken sich leseseitig senkrecht zur Rückwand 263.

In Querrichtung 207, in Figur 6 senkrecht zur zeichenebene, erstrecken sich die Querwände 221 über die gesamte Breite der Rückwand 263 und folgen in Längsrichtung 205 betrachtet kreisbogenförmig deren gekrümmten Verlauf.

In ihren einander zugewandten Innenflächen weisen die Querwände 221 jeweils eine Nut 247 auf, die sich über die gesamte Länge der Querwände 221 in Querrichtung 207 erstreckt und an beiden Stirnseiten offen ist. Die Innenflächen der Nuten 247 sind mit einem gummielastischen Material, welches die Ränder der eingeschobenen Speicherfolie 202 nicht beschädigt, beschichtet.

Die Konturen der der Leseseite abgewandten wände der Nuten 247 gehen jeweils stufenlos in die Kontur der leseseitigen Fläche der Rückwand 263 über.

Die Breiten der Nuten 247 in Leserichtung 209 entsprechen der Dicke der Speicherfolie 202. Die Ausdehnung in Längsrichtung 205 des Bereichs zwischen den Böden der Nuten 247 ist gerade so groß wie die der Speicherfolie 202, so dass die eingeschobene Speicherfolie 202 aufgrund der Reibung zwischen den Nuten 247 gehalten wird. Die Ausdehnung der Rückwand 263 in Querrichtung 207 ist wenigstens so groß wie die entsprechende Ausdehnung der Speicherfolie 202.

Die Speicherfolie 202 wird mit ihren Rändern in Querrichtung 207 so in die Nuten 247 des Trägers eingeschoben, dass ihre Leseseite von der Rückwand 263 abgewandt ist. Die Speicherfolie 202 wird in ihrer Endposition zwischen den Nuten 247 gehalten.

Zusätzlich zu den Querwänden ist bei einer nicht dargestellten Abwandlung an einer Längsseite der Rückwand eine in Längsrichtung verlaufende Längswand vorgesehen. Die Längswand weist eine die Nuten in den Querwände verbindende entsprechende Längsnut mit gleichem Profil auf. In der Längsnut wird die eingeschobene Speicherfolie an der Längsseite gehalten.

Bei einem dritten Ausführungsbeispiel, dargestellt in Figur 7, sind diejenigen Elemente, die zu denen des zweiten, in Verbindung mit Figur 6 beschriebenen Ausführungsbeispiels ähnlich sind, mit denselben Bezugszeichen zuzüglich 100 versehen, so dass bezüglich deren Beschreibung auf die Ausführungen zum zweiten Ausführungsbeispiel Bezug genommen wird.

Dieses Ausführungsbeispiel unterscheidet sich von dem zweiten dadurch, dass die Nuten 347 nicht in den Querwänden 321, sondern in relativ zu den Querwänden 321 und der Rückwand 363 verschiebbaren Federrastelementen 340 ausgebildet sind.

Die Nuten 347 werden im dritten Ausführungsbeispiel in Leserichtung 309 auf der Leseseite und in Querrichtung 307 begrenzt durch die im Profil L-förmigen Federrastelemente 340. Auf den der Leseseite abgewandten Seiten werden sie durch die leseseitige Rückwandfläche begrenzt.

Die Federrastelemente 340 sind über eine Vielzahl in Querrichtung 307 hintereinander angeordnete Führungsbolzen 342 verschiebbar mit den Querwänden 21 verbunden. Die Achsen der Führungsbolzen 342 verlaufen in Längsrichtung 305.

Die Führungsbolzen 342 sind von Schrauben-Druckfedern 344 umgeben, deren Enden an den Querwänden 321 beziehungsweise den Federrastelementen 340 angreifen. Mit den Schrauben-Druckfedern 344 ist eine Federkraft in Längsrichtung 305 zwischen den Querwänden 21 und den verschiebbaren Federrastelemente 340 erzeugbar.

Bei entspannten Schrauben-Druckfedern 344 ist der durch die gegenüberliegenden Nuten 247 begrenzte Bereich in Längsrichtung 305 etwas schmaler als die entsprechende Ausdehnung der Speicherfolie 302. Beim Einschieben der Speicherfolie 302 in Querrichtung 307, in Figur 7 senkrecht zur Zeichenebene, werden durch die Speicherfolie 302 die Federrastelemente 340 gegen die Federkraft der Schrauben-Druckfedern 344 auseinander gedrückt und die Schrauben-Druckfedern 344 vorgespannt. Die Speicherfolie 302 ist dann in ihrer Endposition zwischen den verschiebbaren Federrastelementen 340 eingeklemmt.

Bei einer nicht dargestellten Abwandlung zum dritten Ausführungsbeispiel können zusätzlich auch die Längswände mit entsprechenden Federrastelementen versehen sein. Zum Einführen der Speicherfolie werden dann alle Federrastelemente manuell auseinander gedrückt und die Speicherfolie von der Leseseite in Leserichtung eingelegt. Sobald sie losgelassen werden, entspannen sich die Schrauben-Druck - federn und klemmen die Speicherfolie analog zum dritten Ausführungsbeispiel ein.

Bei einem vierten, nicht dargestellten Ausführungebeispiel ist eine feste Querwand gemäß dem zweiten, in Verbindung mit Figur 6 erläuterten Ausführungsbeispiel auf einer Seite und eine Querwand mit einem verschiebbaren Federrastelement gemäß dem dritten, in Verbindung mit Figur 7 erläuterten, Ausführungabeispiel auf der gegenüberliegenden Seite vorgesehen. Das Einlegen und das Halten der Speicherfolie erfolgt entsprechend.

Statt nur eines Federrastelements 240; 340 je Seite können im zweiten, dritten und vierten Ausführungsbeispiel auch eine Vielzahl von getrennten Federrastelementen vorgesehen sein.

Im zweiten und dritten Ausführungabeispiel können die Nuten 247 beziehungsweise die Federrastelemente 340 statt den Querwänden 221 bzw. 321 auch Längswänden zugeordnet sein.

Statt des Rahmens 47 gemäß dem ersten Ausführungsbeispiel, der Nuten 247 oder der Federrastelemente 340 gemäß dem dritten beziehungsweise vierten Ausführungsbeispiel kann ein Träger, um die Speicherfolie 202; 302 im Träger zu halten, ein magnetisch wirkendes Haltemittel aufweisen, insbesondere kann wenigstens ein Teil des Trägers permanentmagnetisch und die Speicherfolie 202; 302 kann auf ihrer der Leseseite abgewandten Rückseite mit einer diamagnetischen Folie beschichtet stein. Die Speicherfolie 202; 302 wird dann durch magnetische Kräfte an die entsprechende Fläche des Trägers angezogen und dort festgehalten. Zum Positionieren wird die Speicherfolie 202; 302 an eine Anlegekante angelegt.

Bei einem weiteren, nicht dargestellten Ausführungsbeispiel umfasst ein Träger eine elektrostatisch aufgeladene und eine erste Funktionsschicht aufweisende Fläche zum Halten einer Speicherfolie. Auf der von der Leseseite abgewandten Rückseite der Speicherfolie ist eine mit der ersten Funktionaschicht zusammenwirkende zweite Funktionsschicht aufgebracht.

An einer Seite des Aufnahmebereichs für die Speicherfolie befindet sich im Träger eine Anlegekante, an die die Speicherfolie zum Positionieren mit ihrem entsprechenden Rand angelegt wird.

Alternativ oder zusätzlich zu den Funktionsschichten oder magnetischen Haltemitteln kann der Träger in dem Aufnahmebereich für die Speicherfolie eine erneuerbare Haftschicht aus doppelseitiger Klebefolie aufweisen. Beim Austausch der Speicherfolie wird die Haftschieht dann erneuert und der Träger und die Speicherfolien sind wiederverwendbar.

Bei einem anderen, ebenfalls nicht dargestellten Ausführungsbeispiel umfasst der Träger einen Federkolben, mit dem der Bereich zwischen einer glatten Rückseite der Speicherfolie und der entsprechenden Auflagefläche des Trägers mit einem Unterdruck beaufschlagbar ist. Dieser Bereich ist zusätzlich mit O-Ringen abgedichtet. Die Speicherfolie wird beim Einlegen in den Träger an einer

Anlegekante positioniert und durch den Unterdruck auf der entsprechenden Fläche des Trägers festgehalten. Statt dem Pederkolben und den O-Ringen können hier auch andersartige mit einem Unterdruck wirkende Haltemittel mit Dichtungsmitteln verwendet werden.

Bei einem weiteren nicht dargestellten Ausführungsbeispiel weist ein Träger rastbare Gelenke auf, mit denen er in eine Mehrzahl von relativ zueinander schwenkbaren Bereichen unterteilt ist. Durch Schwenken der Bereiche relativ zueinander ist der Träger an eine Aufnahntegeometrie der Auslesevorrichtung, insbesondere des Scanners, anpassbar. Beispielsweise kann der Träger in eine zylindrische Form oder eine ebene Form gebracht werden und ist so universell wahlweise bei einem oben in Verbindung mit dem ersten Ausfuhrungsbeispiel beschriebenen Trommelscanner oder einem Flachbettscanner verwendbar.

Außerdem kann so bei der Verwendung von großflächigen, ebenen Aufnahmegeometrien, beispielsweise Panorama-, Cephoder anderen medizinischen Formaten, der Träger bereits bei der Belichtung mit einem entsprechenden vorzugsweise abatreifbaren Lichtschutzdeckel 3 ausgestattet werden. Anschließend karin der Träger über die Gelenke in die für die Leseeinrichtung erforderliche Form gebracht.

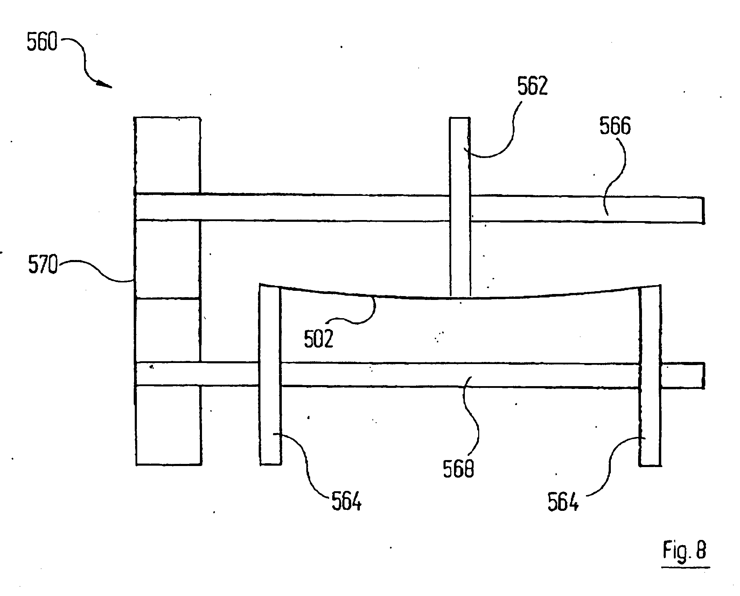

Bei allen oben erläuterten Ausführungsbeispialen kann zusätzlich zu dem Transportschacht für Kassetten mit oder ohne Lichtschutzdeckel auch ein Folientransportschacht für Speicherfolien, die ohne Träger zugeführt werden, vorgesehen sein. Der Folientransportschacht weist im Bereich einer entsprechend gestalteten Leseeinrichtung, die auch mit der Leseeinrichtung für die Kassetten mit Speicherfolien kombinierbar sein kann, beziehungsweise einer Löscheinrichtung ein in Figur 8 dargestelltes zusätzliches Folienantriebsmittel 560 auf.

Das Folienantriebemittel 560 umfasst in Figur 8 oben ein einzelnes Andruckrad 562 und unten zwei Antriebsräder 564. Zwischen den Antriebsrädern 564 und dem Andruckrad 562 ist die Speicherfolie 502 in Figur 8 horizontal in die Zeichenebene hinein beziehungsweise aus dieser heraus transportierbar.

Das einzelne Andruckrad 562 ist frei drehend auf einer horizontalen Achse 566 angeordnet. Die beiden unteren Antriebsräder 564 sind auf einer gemeinsamen horizontalen Antriebsachse 568 befestigt, die über ein Getriebe 570, in Figur 8 links, vorzugsweise ein Zahn- oder Reibradgetriebe, vorzugsweise mit einem ebenfalls nicht gezeigten Elektromotor angetrieben wird. Die Achse 566 ist in einer Halteplatte des Getriebes 570 gelagert.

Das einzelne Andruckrad 562 ragt mit seinem Rand in den Bereich zwischen den beiden unteren Antriebsrädern 564 hinein, wodurch die Speicherfolie 502 in eine zylinderflächig gebogene, von der Leseseite aus, in Figur 8 von oben, betrachtet konkave Form, entsprechend der zylindrischen Form des Trommelscanners, gebracht wird.

Die die Speicherfolie 502 berührenden Ränder des Andruckrades 562 und der Antriebsräder 564 sind mit einem elastischen, eine hohe Mitnahmekraft erzeugenden Material, vorzugsweise mit Gummi oder Silikon, beschichtet.

Mit den Folienantriebsmitteln 560 ist die Speicherfolie 502 in dem ansonsten nicht gezeigten Scanner entlang einer Führungsschiene oder -nut über einen Leseschlitz der Leseeinrichtung und gegebenenfalls im Bereich einer entsprechenden Läscheinrichtung führbar.

Der Folientransportschacht verfügt darüber hinaus über eine Luftlagerführung für die Speicherfolie 502, mit der sie für die Leseseite berührungslos zum Folienantriebsmittel 560 führbar ist.

Mit einer entsprechend geleiteten Luftströmung wird die Speicherfolie 502 unabhängig von ihrem Format seitlich in dem Folientransportschacht in Richtung der Führungsschiene gedrückt und an dieser entlang geführt.

Statt des Folienantriebsmittels 560 mit der Kombination aus Antriebs- und Andruckrädern 562, 564 kann auch ein Walzerlantrieb für Speicherfolien ohne Träger eingesetzt werden.

Bei Verwendung einer kreisförmigen Abtastung wie bei einem Trommelscanner in Verbindung mit ebenen Walzen ist die Tiefenschärfe beispielsweise eines Laserstrahls der Leseeinrichtung vorzugsweise größer als der Abstand zwischen dem Fokus der Detektoroptik, der sich auf einer Kreisbahn um den Detektor befindet, und der leseseitigen ebenen Fläche der Speicherfolie.

Damit die Speicherfolie nicht beim Anlaufen gegen ein zweites Walzenpaar ihren Abstand zu einem Leseschlitz der Leseeinrichtung verändert, ist auf einer Seite eine Frührungsschiene angeordnet, mit der die Speicherfolie in Transportrichtung geführt ist. Hierbei berühren lediglich die der Leseseite abgewandte Rückseite und der entsprechende Rand der Speicherfolie die Führungsschiene.

Ein Eingangsrollenpaar ist so ausgerichtet, dass die Speicherfolie vom Leseschlitz weg mit ihrer Rückseite gegen die Führungsschiene gerückt wird, wodurch sichergestellt wird, dass die Leseseite insbesondere in einem konstanten Abstand vorzugsweise ohne diesen zu berührten am Leseschlitz entlang läuft. Auf diese Weise wird verhindert, dass die Leseseite der Speicherfolie verkratzt wird. Außerdem wird der Abstand der Leseseite der Speicherfolie zu dem Laser und dem Detektor der Leseeinrichtung konstant gehalten.

Die Speicherfolien ohne Träger können auch auf Transportbändern oder auf einer angetriebenen Walzenstraße (ähnlich einem Filmprojektor) oder einer Räderstraße geführt werden.

Im Übrigen können bei allen Ausführungsbeispielen die Führungsmittel, insbesondere die Führungsschienen in dem Transportschacht, bidirektional sein. Der Träger 1, 201, 301, beziehungsweise die Speicherfolie 502 ohne Träger wird dann nach dem Auslesevorgang aus der Öffnung, in die er/sie eingeführt wurde, wieder herausgeführt.

Die Trennung des Trägers 1, 201, 301 beziehungsweise der Speicherfolie vom Lichtschutzmittel 3 kann dann unmittelbar in Einfuhrtransportrichtung hinter beziehungsweise in Ausfuhrtransportrichtung vor der kombinierten Einführ-/Ausfuhröffnung erfolgen.

Der Träger 1, 201, 301 kann dann nach Abschluss des Auslese-/Löschvorgang wieder in das Lichschutzmittel 3 zurückbefördert werden, welches in Ausfuhrtransportrichtung vor der Einführ-/Ausfuhröffnung aufnahmebereit platziert ist. Statt für zwei Speicherfolien kann ein Träger auch für nur eine oder mehr als zwei Speicherfolien vorgesehen sein.

Die Vorrichtung kann auch zum Auslesen von anderen als intraoralen Speicherfolien, beispielsweise von Speicherfolien zur Verwendung in anderen medizinischen oder nichtmedizinischen Bereichen, verwendet werden.

Die Speicherfolien können auch nicht flexibel sein.

Sie können auch eine andere als eine rechteckige Form aufweisen.

Es kann statt des Trommelscanners auch eine andersartige Vorrichtung zum Auslesen von Speicherfolien, beispielsweise ein Flachbettscanner vorgesehen sein. Die Form des Trägers ist dann entsprechend an die Vorrichtung angepaßt. Beispielsweise sind bei Flachbettscannern die leseseitigen Flächen eben statt kreiszylinderförmig gebogen.

Die Größe des Trägers kann abhängig von der Größe der Speicherfolie vorgegeben sein. Sie kann beispielsweise von kleinen intraoralen dentalen Formaten mit Flächen von 20 mm x 30 mm bis zu großen Folienformaten von 350 mm x 430 mm reichen.

Die Speicherfolie kann statt aus der Hygienehülle auch aus einer andersartigen Hülle in den Träger einführbar sein. Auf die Hülle kann auch verzichtet werden.

Beim ersten, in Verbindung mit Figuren 1 bis 5 erläuterten Ausführungsbeispiel kann die Kassette 1 anstelle oder zusätzlich zum Rahmen 47 auf der der Leseseite der Speicherfolie zugewandten Seite, also abtastseitig, wenigstens eine glasklare ebene oder gekrümmte insbesondere kratzunempfindliche und schmutzabweisende Platte aufweisen, an welcher die Speicheriolie positionierber ist.

Die Einschubschlitze 55 im Deckel 13 der Kassette 1 gemäß dem ersten Ausführungabeispiel können auch eine vorzugsweise lichtdichte Klappe oder Bürste aufweisen.

Die Träger 201, 301 beziehungsweise die Speicherfolie 502 ohne Träger gemäß dem zweiten, dritten und vierten Ausführungsbeispiel können ähnlich der Kassette 1 gemäß dem ersten Ausführungsbeispiel ebenfalls entfernbare Schutzmittel, insbesondere Lichtschutzdeckel, aufweisen.

Das Schutzmittel kann statt eines formschlüssigen, entsprechend dem Halteteil 91 mit dem nutförmigen Bereich 97 gemäß dem ersten Ausführungsbeispiel auch ein magnetisch oder adhäsiv wirkendes, insbesondere mit einer Klebeschicht versehenes, Verbindungselement zum Träger aufweisen.

Das Verbindungselement kann auch manuell lösbar sein. Statt der formschlüssigen Schiebeverbindung wie beim ersten Ausbildungsbeispiel kann auch eine Steckverbindung vorgesehen sein.

Das Schutzmittel, insbesondere die Lichtschutzvorderwand 77 des Lichtschutzdeckels 3, kann statt aus Aluminium auch aus einem anderen Material mit hoher Rontgentransparenz, beispielsweise aus mit Carbonfaser gefülltem Kunststoff sein. Es kann auch vollkommen undurchlässig für Strahlung sein. Statt der Form einer Röntgenkassette kann das Schutzmittel mit Träger auch eine andersartige Form haben.

Der Träger kann auch so gestaltet sein, dass er bei der Verwendung von anderen Speicherfolienformaten wahlweise mit nur einer oder einer Vielzahl von Speicherfolien bestückt werden kann.

Die Außenmaße des Trägers können auch von übliche Abmessungen abweichen, vorzugsweise ist der Träger an eine verwendete Vorrichtung, insbesondere den verwendeten Scanner, angepasst oder anpassbar.

Statt mit einer schwenkbaren Klappe kann die Einfuhröffnung und/oder die Ausgabeöffnung des Transportschachts beziehungsweise des Folientransportschachts auch mit einer schiebbaren Klappe oder einer Bürste abgedichtet sein.

Die Oberfläche der Führungsmittel, insbesondere der Führungsschienen, kann auch aus PTFE und statt dessen die des Trägers aus hart anodisiertem Aluminium sein. Es können auch andere, einen kleinen Gleitreibungskoeffizienten realisierende Materialpaarungen, beispielsweise POM auf Stahl, verwendet werden.

Es können auch andersartige Mittel zur Verringerung der Reibung beim Transport eingesetzt werden. Beispielsweise kann der Träger und/oder das Führungsmittel in angrenzenden Bereichen umlaufende Kugelführungen oder magnetisch wirkende Trägerführuhgselemente oder Trägerführungselemente mit Luftlagerungen aufweisen. Am Träger können beispielsweise auch kugelgelagerte Räder angebracht sein, die auf den Führungsschienen oder in Puhrungsnuten laufen.

Das Führungsmittel, insbesondere die Führungsschienen im Transportschacht, kann sich zusätzlich oder statt hinter der Einführöffnung auch in einen Bereich außerhalb des Transportschachts in Transportrichtung vor der Einführöffnung erstrecken, wodurch der Aufnahmebereich für eine Vielzahl von Trägern deutlich vergrößert wird.

Alternativ zu den in den Transportweg eingreifenden Hubmagnetachsen können auch andersartige Vereinzelungsmechaniken, beispielsweise auf Motorachsen befestigte Hebel, verwendet werden.

Statt oder zusätzlich zu den Lichtschranken können auch andersartige Mittel zur Bestimmung der Position der Träger, beispielsweise mechanische Taster, vorgesehen sein.

Die Vorrichtung zum Auslesen der Speicherfolien, insbesondere der Scanner, kann auch keine oder eine andersartige Löscheinrichtung aufweisen.

Statt der Warmton-Leuchtröhre in der Löscheinrichtung kann auch eine andere Leuchtstoffröhre mit geringem blauen und UV-Spektralanteil, beispielsweise eine nur Rot-Leuchtstoff-beschichtete Röhre, verwendet werden.

Um noch kürzere Löschzeiten zu erzielen, kann statt der Warmton-Leuchtstoffröhre auch eine Halogenstablampen eingesetzt werden. Eine solche besitzt eine höhere Leistungsaufnahme und Lichtabgabeintensität bezogen auf die Fläche ihres Emitters.

Das Lampengehäuse kann vorzugsweise aus einem für das Löschlicht hochreflektiven Material, beispielsweise aus weißem oder gelbem Schaumstoff, weißem Teflon, blank poliertem Aluminiumblech oder aus einem beliebigen Trägermaterial bestehen, welches mit einer Reflektionsschicht beispielsweise aus BaSO₄, das insbesondere mit einem Gelbfärbstoff versetzt ist, beschichtet ist.

Das Kantenfilter kann statt aus Kunststofffolie auch aus einem andersartigen Material, beispielsweise auch aus Glas mit den entsprechenden optischen Eigenschaften sein.

Die herausgeführten Träger können mit einer alternativen Sammeleinrichtung statt hintereinander aufgereiht auch aufeinander gestapelt werden. In diesem Fall sieht die Sammeleinrichtung vor, die Träger zu kippen und horizontal geschichtet abzulegen.

Damit nacheinander folgend alle Träger auf das gleiche Niveau kippen, kann dann ein Mittel zur Höhenkompensation, beispielsweise eine federgespannte Auflagefläche unter dem Stapel, vorgesehen sein. Sie senkt sich um eine Trägerdikke ab, wenn ein weiterer Träger auf den Stapel gelegt wird und so das aufliegende Gewicht um das eines Trägers zunimmt. Auf diese Weise befindet sich der jeweils oben liegende Träger immer auf gleichem Niveau.

Statt der mechanischen Rasten kann die Sammeleinrichtung auch andersartige Stützmittel für herausgeführte Träger aufweisen.

Der Transportweg, die Transporteinrichtung, die Leseeinrichtung, die Löscheinrichtung und/oder die Sammeleinrichtung für Träger und solche für Speicherfolien ohne Träger können ahnlich oder unterschiedlich aufgebaut sein. Alle in Verbindung mit den Ausführungsbeispielen beschriebenen Komponenten und deren Alternativen können auch untereinander kombinierbar sein. Der Transportweg, die Transporteinrichtung, die Leseeinrichtung, Löscheinrichtung und/oder die Sammeleinrichtung können auch wenigstens zum Teil universell aufgebaut sein, so dass sie wahlweise für die Träger oder für die Speicherfolien ohne Träger verwendbar sind.

Die Träger können, auch in Verbindung mit anderen insbesondere bekannten Auslesvorrichtungen, insbesondere bekannten Trommelscannern oder Flachbettscannern, verwendet werden.

Statt einer scannenden Leseeinrichtung kann auch eine Leseeinrichtung verwendet werden, mit der die Bildinformation in einem Stück auslesbar ist. Beispielsweise kann eine die gesamte Bildfläche der Speicherfolie bestrahlende Lichtquelle in Verbindung mit einem Plächendetektor, beispielsweise einem CCD-Chip, verwendet werden.

## Patentansprüche

1. Vorrichtung zum Auslesen von wenigstens einer insbesondere flexiblen Speicherfolie für Röntgenbildinformationen, mit
a) einer Leseeinrichtung zum Auslesen von auf der Speicherfolie gespeicherten Informationen,
b) einer Transporteinrichtung mit wenigstens einem Antriebsmittel zum Transportieren der Speicherfolie relativ zur Leseeinrichtung entlang eines Führungsmittels auf einem in seiner Form an die Form eines Lesebereichs der Ausleseeinrichtung angepassten Transportweg,
c) wenigstens einem im Wesentlichen festen Träger (1; 201; 301) für die Speicherfolie (202; 302), wobei die Form und die Abmessungen des Trägers (1; 201; 301) an die Form des Transportweges angepasst sind und beim Transport der Speicherfolie mit dem Träger (1; 201; 301) die Speicherfolie mit dem Antriebsmittel nicht in Kontakt kommt,
**gekennzeichnet durch**
ein zusätzliches Antriebsmittel (560) für Speicherfolien (502) ohne Träger, insbesondere mit einer Anordnung aus wenigstens einem Antriebsrad (564) une wenigstens einem Andruckrad (562), um der Vorrichtung auch Speicherfolien (502) ohne Träger zuführen zu können.

2. Vorrichtung nach Anspruch 1, **gekennzeichnet durch** eine Steuereinrichtung.

3. Vorrichtung nach einem der vorhergehenden Ansprüche, **dadurch gekennzeichnet, dass** die Leseeinrichtung ein Flachbettscanner oder ein Trommelscanner insbesondere für rechteckige Speicherfolien (202; 302) und der Träger (1; 201; 301) entsprechend eben beziehungsweise zylindrisch gekrümmt ist.

4. Vorrichtung nach einem der vorherigen Ansprüche, **dadurch gekennzeichnet, dass** die Speicherfolie (202; 302) mit dem Träger (1; 201; 301) lösbar verbindbar ist.

5. Vorrichtung nach einem der vorhergehenden Ansprüche, **dadurch gekennzeichnet, dass** der Träger (1) eine Kassettenform aufweist und wenigstens einen Schlitz (55) hat, durch welchen die Speicherfolie insbesondere aus einer Hülle, insbesondere einer Hygienehülle, in den Träger (1) einführbar ist.

6. Vorrichtung nach einem der vorhergehenden Ansprüche, **dadurch gekennzeichnet, dass** der Träger (1) auf der einer Leseseite der Speicherfolie zugewandten Seite wenigstens einen Rahmen (47) aufweist, an welchem die Speicherfolie positioniert ist.

7. Vorrichtung nach einem der vorhergehenden Ansprüche, **dadurch gekennzeichnet, dass** der Träger auf der einer Leseseite der Speicherfolie zugewandten Seite wenigstens eine glasklare entsprechend der Leseeinrichtung ebene beziehungsweise gekrümmte insbesondere kratzunempfindliche und/oder schmutzabweisende Platte aufweist.

8. Vorrichtung nach einem der vorhergehenden Ansprüche, **dadurch gekennzeichnet, dass** der Träger (1) einen verschließbaren Deckel (13) aufweist, mit dem die Speicherfolie im Träger (1) fixierbar ist.

9. Vorrichtung nach einem der vorhergehenden Ansprüche, **dadurch gekennzeichnet, dass** der Träger (201) wenigstens zwei Nuten (247) zur Aufnahme von wenigstens zwei insbesondere gegenüberliegenden Rändern der Speicherfolie (202) aufweist.

10. Vorrichtung nach einem der vorhergehenden Ansprüche, **dadurch gekennzeichnet, dass** der Träger ein magnetisch wirkendes Haltemittel für die Speicherfolie aufweist, insbesondere ist wenigstens ein Teil des Trägers permanentmagnetisch und die Speicherfolie ist auf ihrer einer Leseseite abgewandten Rückseite mit einer diamagnetischen Folie beschichtet.

11. Vorrichtung nach einem der vorhergehenden Ansprüche, **dadurch gekennzeichnet, dass** der Träger wenigstens eine elektrostatisch aufgeladene Fläche zum Halten der Speicherfolie umfasst, wobei die Fläche insbesondere eine erste elektrostatisch aufgeladene Funktionsschicht aufweist und auf der der Leseseite abgewandten Rückseite der Speicherfolie eine mit der ersten Funktionsschicht zusammenwirkende zweite Funktionsschicht aufgebracht ist.

12. Vorrichtung nach einem der vorhergehenden Ansprüche, **dadurch gekennzeichnet, dass** der Träger eine insbesondere erneuerbare Haftschicht, beispielsweise eine doppelseitige Klebefolie, aufweist, die die Speicherfolie hält.

13. Vorrichtung nach einem der vorhergehenden Ansprüche, **dadurch gekennzeichnet, dass** das Antriebsmittel für Träger bzw. das zusätzliche Antriebsmittel (560) für Speicherfolien (502) ohne Träger wenigstens ein Transportband oder wenigstens eine angetriebene Walzen- oder Räderanordnung (562, 564) umfasst.

14. Vorrichtung nach einem der vorhergehenden Ansprüche, **dadurch gekennzeichnet, dass** der Träger (301) wenigstenseine Klemmeinrichtung zum Halten der Speicherfolie (302) aufweist, wobei die Klemmeinrichtung insbesondere zwei zusammenwirkende Klemmelemente (340), die gegenüberliegenden Rändern der Speicherfolie (302) zugeordnet sind, oder ein Klemmelement und eine mit diesem zusammenwirkende Anlegeschiene, die einem dem Klemmelement gegenüberliegenden Rand der Speicherfolie zugeordnet ist, umfaßt, wobei die an die Ränder der Speicherfolie (302) angreifenden Bereiche der Klemmeinrichtung vorzugsweise ein gummielastisches Material aufweisen.

## Claims

1. Device for reading out at least one in particular flexible imaging plate for x-ray imaging information, having
a) a reading device for reading out information stored on the imaging plate,
b) a transport device having at least one drive means for transporting the imaging plate relative to the reading device along a guide means on a transport path, which has a shape adapted to the shape of a reading region of the read out device,
c) at least one substantially rigid support (1; 201; 301) for the imaging plate (202; 302), wherein the shape and dimensions of the support (1; 201; 301) are adapted to the shape of the transport path and wherein the imaging plate does not come into contact with the drive means when the imaging plate is transported with the support (1; 201; 301),
**characterized by**
an additional drive means (560) for imaging plates (502) without a support, in particular comprising an arrangement composed of at least one drive wheel (564) and at least one pressure wheel (562), in order to be able to even feed the device with imaging plates (502) without a support.

2. Device according to Claim 1, **characterized by** a control device.

3. Device according to any one of the preceding Claims, **characterized in that** the reading device is a flatbed scanner or a drum scanner, in particular for rectangular imaging plates (202; 302), and the support (1; 201; 301) is correspondingly flat or cylindrically curved, respectively.

4. Device according to any one of the preceding claims, **characterized in that** the imaging plate (202; 302) can be detachably connected to the support (1; 201; 301).

5. Device according to any one of the preceding claims, **characterized in that** the support (1) is in the form of a cassette and has at least one slot (55) through which the imaging plate can be inserted into the support (1) in particular from a sheath, in particular a hygiene sheath.

6. Device according to any one of the preceding claims, **characterized in that** the support (1) has, on the side which faces towards a reading side of the imaging plate, at least one frame (47) on which the imaging plate is positioned.

7. Device according to any one of the preceding claims, **characterized in that** the support has, on the side which faces towards a reading side of the imaging plate, at least one glass-clear plate which is flat or curved in correspondence with the reading device, and in particular is scratch-resistant and/or dirt-repellent.

8. Device according to any one of the preceding claims, **characterized in that** the support (1) has a lockable cover (13), by means of which the imaging plate can be fixed in position in the support (1).

9. Device according to any one of the preceding claims, **characterized in that** the support (201) has at least two grooves (247) for receiving at least two in particular opposing edges of the imaging plate (202).

10. Device according to any one of the preceding Claims, **characterized in that** the support has a magnetically acting holding means for holding the imaging plate, in particular at least a part of the support is permanently magnetic and the imaging plate is coated with a diamagnetic film on its back side that faces away from a reading side.

11. Device according to any one of the preceding Claims, **characterized in that** the support comprises at least one electrostatically charged surface for holding the imaging plate, the surface having, in particular, a first electrostatically charged function layer, and, on the back side of the imaging plate which faces away from the reading side, a second function layer which cooperates with the first function layer.

12. Device according to any one of the preceding Claims, **characterized in that** the support has an in particular renewable adhesive layer, for example a double-sided adhesive film, which holds the imaging plate.

13. Device according to any one of the preceding claims, **characterized in that** the drive means for supports and/or the additional drive means (560) for imaging plates (502) without a support comprises at least one transport belt or at least one driven roller arrangement or wheel arrangement (562, 564).

14. Device according to any one of Claims 1 to 8, **characterized in that** the support (301) has at least one clamping device for holding the imaging plate (302), the clamping device comprising in particular two cooperating clamping elements (340), which are assigned to opposing edges of the imaging plate (302), or one clamping element and a guide rail which cooperates therewith and is assigned to an edge of the imaging plate opposite the clamping element, the regions of the clamping device which act upon the edges of the imaging plate (302) preferably having a rubber-elastic material.

## Revendications

1. Dispositif pour lire au moins une feuille notamment souple de mémorisation des informations radiographiques, avec
a) un équipement de lecture pour lire des informations mémorisées sur la feuille de mémorisation,
b) un équipement de transport avec au moins un moyen d'entraînement, pour transporter la feuille de mémorisation par rapport à l'équipement de lecture le long d'un moyen de guidage sur un parcours de transport d'une forme adaptée à la forme de la zone de lecture de l'équipement de lecture,
c) au moins un support (1 ; 201 ; 301) essentiellement rigide pour la feuille de mémorisation (202 ; 302), sachant que la forme et les dimensions du support (1 ; 201 ; 301) sont adaptées à la forme du parcours de transport et que la feuille de mémorisation (202 ; 302), lors de son transport avec le support (1 ; 201 ; 301), n'entre pas en contact avec le moyen d'entraînement,
**caractérisé par** un moyen d'entraînement supplémentaire (560) pour des feuilles de mémorisation (502) sans support, notamment avec un agencement constitué d'au moins une roue d'entraînement (564) et d'au moins une roue de pression (562).

2. Dispositif selon la revendication 1; **caractérisé par** un équipement de commande.

3. Dispositif selon l'une des revendications précédentes, **caractérisé en ce que** l'équipement de lecture est un scanner à plateau ou un scanner à tambour, en particulier pour des feuilles de mémorisation rectangulaires (202 ; 302) et **en ce que** le support (1 ; 201 ; 301 ) est plat ou respectivement a une courbure cylindrique.

4. Dispositif selon l'une des revendications précédentes, **caractérisé en ce que** la feuille de mémorisation (202 ; 302) peut être reliée de manière détachable au support (1 ; 201 ; 301).

5. Dispositif selon l'une des revendications précédentes, **caractérisé en ce que** le support (1) présente une forme de cassette et possède au moins une fente (55) par laquelle la feuille de mémorisation peut être introduite dans le support (1), en particulier à partir d'une enveloppe, notamment d'une enveloppe hygiénique.

6. Dispositif selon l'une des revendications précédentes, **caractérisé en ce que** le support (1) présente, sur son côté tourné vers un côté de lecture de la feuille de mémorisation, au moins un cadre (47) contre lequel est positionnée la feuille de mémorisation.

7. Dispositif selon l'une des revendications précédentes, **caractérisé en ce que** le support présente, sur son côté tourné vers un côté de lecture de la feuille de mémorisation, au moins une plaque transparente, notamment insensible aux rayures et/ou repoussant la poussière, plate respectivement courbée d'une manière correspondant à l'équipement de lecture.

8. Dispositif selon l'une des revendications précédentes, **caractérisé en ce que** le support (1) présente un couvercle (13) pouvant être fermé, par lequel la feuille de mémorisation peut être immobilisée dans le support (1).

9. Dispositif selon l'une des revendications précédentes, **caractérisé en ce que** le support (201) présente au moins deux rainures (247) pour recevoir au moins deux bords notamment opposés de la feuille de mémorisation (202).

10. Dispositif selon l'une des revendications précédentes, **caractérisé en ce que** le support présente un moyen de maintien à action magnétique pour la feuille de mémorisation, en particulier **en ce qu'**au moins une partie du support est à aimantation permanente et la feuille de mémorisation est revêtue, sur son côté arrière opposé à un côté de lecture, d'une feuille diamagnétique.

11. Dispositif selon l'une des revendications précédentes, **caractérisé en ce que** le support comprend au moins une surface électrostatiquement chargée pour maintenir la feuille de mémorisation, sachant que la surface présente notamment une première couche fonctionnelle électrostatiquement chargée et qu'une deuxième couche fonctionnelle coopérant avec la première couche fonctionnelle est apposée sur le côté arrière, opposé au côté de lecture, de la feuille de mémorisation.

12. Dispositif selon l'une des revendications précédentes, **caractérisé en ce que** le support présente une feuille adhésive notamment renouvelable, par exemple une feuille d'adhésif double face, qui maintient la feuille de mémorisation.

13. Dispositif selon l'une des revendications précédentes, **caractérisé en ce que** le moyen d'entraînement pour des supports et/ou le moyen d'entraînement supplémentaire (560) pour des feuilles de mémorisation (502) sans support comprennent au moins une bande transporteuse et/ou au moins un ensemble entraîné de rouleaux ou de roues (562, 564).

14. Dispositif selon l'une des revendications précédentes, **caractérisé en ce que** le support (301) présente au moins un équipement de serrage pour maintenir la feuille de mémorisation (302), sachant que l'équipement de serrage comprend notamment deux éléments de serrage coopérants (340) qui sont associés à des bords opposés de la feuille de mémorisation (302), ou un élément de serrage et un rail de guidage coopérant avec ce dernier et associé à un bord de la feuille de mémorisation qui est opposé à l'élément de serrage, sachant que les régions de l'équipement de serrage qui agissent sur les bords de la feuille de mémorisation (302) présentent de préférence un matériau ayant l'élasticité du caoutchouc.
